# EUROPEAN PATENT APPLICATION

(11) **EP 4 835 028 A1**
(43) Date of publication of application: **04.11.2026**
(21) Application number: 24912958.6
(22) Date of filing: 25.12.2024
(51) Int. Cl.: C09J 7/38, C09J 201/02

(54) **ADHESIVE SHEET AND JOINED BODY**

(30) Priority: 28.12.2023 JP 2023223308
(71) Applicant: Nitto Denko Corporation, Ibaraki-shi, Osaka 567-8680 (JP); Kyushu University, National University Corporation, Nishi-ku Fukuoka-shi Fukuoka 819-0395 (JP); Institute For 2D Materials LLC., Fukuoka-shi, Fukuoka 812-0023 (JP)
(72) Inventor: HONDA, Satoshi, Ibaraki-shi, Osaka 567-8680 (JP); AGO, Hiroki, Fukuoka-shi, Fukuoka 819-0395 (JP); NAKATANI, Maki, Fukuoka-shi, Fukuoka 819-0395 (JP); KAWAHARA, Kenji, Fukuoka-shi, Fukuoka 812-0023 (JP)
(74) Representative: Müller-Boré & Partner Patentanwälte PartG mbB
(86) International application number: PCT/JP2024/046049
(87) International publication number: WO 2025/143072

(57) **Abstract**

Provided is an adhesive sheet comprising a base material and an adhesive layer, wherein the adhesive layer contains a polymer having a radical-reactive carbon-carbon double bond in a side chain, the tensile elastic modulus at 23°C after curing of the adhesive layer is 9-1000 MPa, and the peel force of the adhesive sheet at 23°C before curing of the adhesive layer on a silicon wafer is 0.001-3.0 N/20 mm when the adhesive sheet is peeled at 180° at a tensile speed of 300 mm/min.

## Description

### TECHNICAL FIELD

The present invention relates to an adhesive sheet and a joined body of the adhesive sheet and a two-dimensional material.

### BACKGROUND ART

In recent years, adhesive sheets that are re-peelable from adherends, that is, re-peelable adhesive sheets, have been used in various technical fields. A re-peelable adhesive sheet has an adhesive layer that forms an adhesive surface capable of being peeled from an adherend after being bonded to the adherend. Such re-peelable adhesive sheets are used, for example, as protective films for protecting adherend surfaces during manufacturing and processing of various optical materials, such as polarizing films, retardation films, and antireflection films, and during manufacturing and transportation of furniture. In manufacturing and processing of various optical materials, re-peelable adhesive sheets are bonded to surfaces of the optical materials and used for purposes such as preventing scratches and contamination on the surfaces of the optical materials and suppressing cracking during cutting of the optical materials. The re-peelable adhesive sheets are then peeled from the optical materials at a specified time during manufacturing or processing of the optical materials, or before use of the optical materials. Re-peelable adhesive sheets are described, for example, in Patent Literature 1 below.

Two-dimensional materials, such as two-dimensional carbon materials, are expected to find various applications, including wiring materials and transparent electrodes, because of their favorable electrical properties and optical properties. Among two-dimensional carbon materials, graphene, which is a conductive planar crystal of sp²-bonded carbon atoms, has high light transmittance and electrical conductivity, and is expected to be used for transparent conductive films, transparent electrodes, transistors, and the like.

Graphene has been produced by methods such as chemical vapor deposition (CVD) on a catalytic metal surface. However, when graphene is used in a device, a step of transferring graphene formed on the surface of the catalyst metal to a surface of a substrate is required.

For example, Patent Literature 2 describes an adhesive material for temporarily fixing a fragile member, such as graphene, the adhesive material containing, as a main component, a polyurethane-based resin obtained by curing an adhesive composition containing a polyol and a polyfunctional isocyanate compound.

### CITATION LIST

### Patent Literature

Patent Literature 1: JPH11-000961A
Patent Literature 2: JP2014-172989A

### SUMMARY OF INVENTION

### Technical Problem

A re-peelable adhesive sheet is expected to have so-called low-contamination properties, such that, when the adhesive sheet is peeled from an adherend, contamination such as adhesive residue is unlikely to occur on the adherend. In addition, an adhesive sheet used for transfer of a two-dimensional material is desired to achieve a high transfer rate of the two-dimensional material. According to the findings of the present inventors, the technique described in Patent Literature 2 had further room for improvement in terms of low-contamination properties.

In view of the foregoing, one object of the present disclosure is to provide an adhesive sheet capable of achieving a high transfer rate of a two-dimensional material and also having favorable low-contamination properties.

### Solution to Problem

In accordance with one aspect of the present disclosure, an adhesive sheet includes a base material and an adhesive layer. The adhesive layer contains a polymer having a radical-reactive carbon-carbon double bond in a side chain. The tensile elastic modulus at 23°C of the adhesive layer after curing, as measured under the measurement conditions set forth below, is 9 to 1000 MPa. A peel force, measured at 23°C before curing, of the adhesive layer of the adhesive sheet with respect to a silicon wafer, when 180° peeling is performed at a tensile speed of 300 mm/min, is 0.001 to 3.0 N/20 mm.

### (Measurement conditions for the tensile elastic modulus of the adhesive layer after curing)

The tensile elastic modulus of the adhesive layer after curing is an initial tensile elastic modulus calculated from a slope at a point at which a slope of stress with respect to strain is maximum between 10% strain and 100% strain when a cylindrical sample, obtained by irradiating the adhesive layer with ultraviolet light at a dose of 450 mJ/cm² and rolling the adhesive layer so as to have a length of 30 mm and a diameter of 1 mm, is gripped at upper and lower 10-mm portions in a length direction and pulled at a speed of 50 mm/min.

In accordance with another aspect of the present disclosure, an adhesive sheet includes a base material and an adhesive layer. The adhesive layer contains a polymer having a radical-reactive carbon-carbon double bond in a side chain. A peel force x (N/20 mm), measured at 23°C before curing, of the adhesive layer of the adhesive sheet with respect to a silicon wafer, when 180° peeling is performed at a tensile speed of 300 mm/min, and an HSP polar term y (MPa^{0.5}) of the polymer satisfy at least one of relationships represented by Formula 1 and Formula 2 below: $y - 0.52 x - 4.7 ≧ 0$ (Formula 1) $y + 0.50 x - 4.8 ≦ 0$ (Formula 2).

In accordance with a further aspect of the present disclosure, a joined body includes any of the adhesive layers adhered to a two-dimensional material. Advantageous Effects of Invention

The adhesive sheet of the present disclosure achieves a high transfer rate of a two-dimensional material and also has favorable low-contamination properties.

### BRIEF DESCRIPTION OF DRAWINGS

[Fig. 1] Fig. 1 is a schematic cross-sectional view showing a laminate (first laminate) having a two-dimensional material on a first substrate.
[Fig. 2] Fig. 2 is a schematic cross-sectional view showing a state (second laminate) in which an adhesive sheet is attached to the two-dimensional material on the first substrate.
[Fig. 3] Fig. 3 is a schematic cross-sectional view showing a state in which bubbles are formed between the first substrate and the two-dimensional material.
[Fig. 4] Fig. 4 is a schematic cross-sectional view of a laminate (third laminate) including the adhesive sheet and the two-dimensional material.
[Fig. 5] Fig. 5 is a schematic cross-sectional view showing a state (fourth laminate) in which the laminate (third laminate) including the adhesive sheet and the two-dimensional material is placed on the second substrate such that the surface of the two-dimensional material of the laminate is in contact with the second substrate.
[Fig. 6] Fig. 6 is a schematic cross-sectional view showing a step of obtaining a two-dimensional material laminate including the second substrate and the two-dimensional material by peeling the adhesive sheet from the fourth laminate.
[Fig. 7] Fig. 7 is a graph plotting, for the adhesive sheets of the Examples and the Comparative Examples, the relationship between peel force (N/20 mm) with respect to a silicon wafer before UV irradiation and tensile elastic modulus (MPa) of the adhesive layer after UV irradiation. However, UV irradiation was not performed on the adhesive sheet of Comparative Example 2.
[Fig. 8] Fig. 8 is a graph plotting, for the adhesive sheets of the Examples and Comparative Examples, the relationship between peel force (N/20 mm) with respect to a silicon wafer before UV irradiation and an HSP polar term of the polymer (MPa^{0.5}).

### DESCRIPTION OF EMBODIMENTS

An embodiment of the present invention will be described below in detail. However, the present invention is not limited to such embodiments.

In the drawings below, members and portions having the same function may be denoted by the same reference signs, and repetitive descriptions thereof may be omitted or simplified. In addition, the embodiment shown in the drawings is schematically illustrated for clearly describing the present invention, and does not necessarily accurately represent the actual product size or scale.

Further, in the present specification, when a numerical range is expressed using "to," the expression includes the numerical values or physical property values recited before and after "to."

### [Adhesive Sheet]

In accordance with one aspect (first aspect) of the present disclosure, an adhesive sheet includes a base material and an adhesive layer. The adhesive layer contains a polymer having a radical-reactive carbon-carbon double bond in a side chain. The tensile elastic modulus at 23°C of the adhesive layer after curing, as measured under the measurement conditions set forth below, is 9 to 1000 MPa. A peel force, measured at 23°C before curing, of the adhesive layer of the adhesive sheet with respect to a silicon wafer, when 180° peeling is performed at a tensile speed of 300 mm/min, is 0.001 to 3.0 N/20 mm.

### (Measurement conditions for the tensile elastic modulus of the adhesive layer after curing)

The tensile elastic modulus of the adhesive layer after curing is an initial tensile elastic modulus calculated from a slope at a point at which a slope of stress with respect to strain is maximum between 10% strain and 100% strain when a cylindrical sample, obtained by irradiating the adhesive layer with ultraviolet light at a dose of 450 mJ/cm² and rolling the adhesive layer so as to have a length of 30 mm and a diameter of 1 mm, is gripped at upper and lower 10-mm portions in a length direction and pulled at a speed of 50 mm/min.

In accordance with another aspect (second aspect) of the present disclosure, an adhesive sheet includes a base material and an adhesive layer. The adhesive layer contains a polymer having a radical-reactive carbon-carbon double bond in a side chain. A peel force x (N/20 mm), measured at 23°C before curing, of the adhesive layer of the adhesive sheet with respect to a silicon wafer, when 180° peeling is performed at a tensile speed of 300 mm/min, and an HSP polar term y (MPa^{0.5}) of the polymer satisfy at least one of relationships represented by Formula 1 and Formula 2 below: $y - 0.52 x - 4.7 ≧ 0$ (Formula 1) $y + 0.50 x - 4.8 ≦ 0$ (Formula 2).

Hereinafter, the adhesive sheet according to the first aspect and the adhesive sheet according to the second aspect may be collectively described as the adhesive sheet of the present embodiment.

The adhesive sheet of the present embodiment is in a form provided with a base material, and includes an adhesive layer and the base material. Particularly, in view of handleability, an adhesive sheet having an adhesive layer on one side of a base material (single-sided adhesive sheet) is preferred. The concept of the adhesive sheet herein may include what is referred to as an adhesive tape, an adhesive film, an adhesive label, and the like.

The adhesive layer in the adhesive sheet of the present embodiment contains a polymer having a radical-reactive carbon-carbon double bond in a side chain. Since the adhesive layer contains the polymer having a radical-reactive carbon-carbon double bond in a side chain, the adhesive layer is cured upon being supplied with active energy rays such as ultraviolet light. Therefore, when the adhesive layer of the present embodiment is attached to an adherend, irradiated with active energy rays such as ultraviolet light, and then peeled from the adherend, contamination such as adhesive residue on the adherend is favorably suppressed or prevented, and favorable low-contamination properties are exhibited. Accordingly, the adhesive sheet of the present embodiment has favorable re-peelability.

Examples of the active energy rays supplied to cure the adhesive layer include ionizing radiation such as α-rays, β-rays, γ-rays, X-rays, neutron rays, and electron beams, and ultraviolet light and visible light. In view of versatility in consideration of equipment scale and reduction of damage to materials, radiation such as electron beams, ultraviolet light, α-rays, β-rays, γ-rays, and X-rays is preferred, and ultraviolet light is particularly preferred.

The method for generating ultraviolet light is not particularly limited, and a known and commonly used generation method may be adopted. Examples thereof include a discharge lamp method (arc lamp), a flash method, a laser method, and a UV-LED method. In the present invention, in view of favorable industrial productivity, it is preferable to use a discharge lamp method (arc lamp) or a UV-LED method, and among these, in view of favorable irradiation efficiency, it is preferable to use an irradiation method employing a high-pressure mercury lamp, a metal halide lamp, or a UV-LED.

As the wavelength of the ultraviolet light, a wavelength in the ultraviolet region may be used without particular limitation, but it is preferable to use a wavelength of about 250 to 440 nm as a wavelength generally used for photopolymerization and used in the above ultraviolet generation method.

In the present specification, re-peelability refers to a property whereby an article adhered to an adherend can be easily peeled from the adherend when the article is to be removed.

In the adhesive sheet according to the first aspect, the peel force, measured at 23°C before curing, of the adhesive layer with respect to a silicon wafer (180° peel force with respect to a silicon wafer) is 0.001 to 3.0 N/20 mm when 180° peeling is performed at a tensile speed of 300 mm/min. In view of handleability and the like, the peel force is 0.001 N/20 mm or more, preferably 0.01 N/20 mm or more, more preferably 0.03 N/20 mm or more, and still more preferably 0.05 N/20 mm or more. In view of transferring a two-dimensional material at a high transfer rate, the peel force is 3.0 N/20 mm or less, preferably 2.5 N/20 mm or less, more preferably 2.0 N/20 mm or less, and still more preferably 1.5 N/20 mm or less.

The peel force, measured at 23°C before curing, of the adhesive layer with respect to a silicon wafer (180° peel force with respect to a silicon wafer) can be calculated by the method described in Examples.

In the adhesive sheet according to the second aspect, for the same reasons as described above, the peel force, measured at 23°C before curing, of the adhesive layer of the adhesive sheet with respect to a silicon wafer (180° peel force with respect to a silicon wafer) is preferably 0.001 to 3.0 N/20 mm when 180° peeling is performed at a tensile speed of 300 mm/min.

In the adhesive sheet according to the first aspect, the tensile elastic modulus at 23°C of the adhesive layer after curing is 9 to 1000 MPa. In view of suppressing damage to a two-dimensional material due to deformation and transferring the two-dimensional material at a high transfer rate, the tensile elastic modulus of the adhesive layer is 9 MPa or more, preferably 10 MPa or more, more preferably 20 MPa or more, and still more preferably 100 MPa or more. Further, the tensile elastic modulus of the adhesive layer is 1000 MPa or less, preferably 200 MPa or less, and more preferably 150 MPa or less. When the tensile elastic modulus of the adhesive layer is 1000 MPa or less, large bending stress is less likely to be applied when peeling occurs between the first substrate and the two-dimensional material, and stable peeling is achieved.

Specifically, the tensile elastic modulus of the adhesive layer after curing can be calculated as follows.

A cylindrical sample is prepared by irradiating the adhesive layer with ultraviolet light at a dose of 450 mJ/cm² and rolling the adhesive layer so as to have a length of 30 mm and a diameter of 1 mm. Using a tensile tester, upper and lower 10-mm portions of the cylindrical sample in the length direction are gripped, and the cylindrical sample is pulled at a speed of 50 mm/min. The initial tensile elastic modulus calculated from the slope at a point at which the slope of stress with respect to strain is maximum between 10% strain and 100% strain is defined as the tensile elastic modulus of the adhesive layer after curing. When the adhesive after ultraviolet irradiation is brittle and easily broken so that it cannot be rolled to a length of 30 mm and a diameter of 1 mm, the adhesive layer can be rolled without breakage by masking 5% or less of the initial portion in the winding direction and not irradiating that portion with ultraviolet light.

In the adhesive sheet according to the second aspect, for the same reasons as described above, the tensile elastic modulus at 23°C of the adhesive layer after curing is preferably 9 to 1000 MPa.

In the adhesive sheet according to the second aspect, a peel force x (N/20 mm), measured at 23°C before curing, of the adhesive layer with respect to a silicon wafer when 180° peeling is performed at a tensile speed of 300 mm/min, and an HSP polar term y (MPa^{0.5}) of the polymer satisfy at least one of the relationships represented by Formula 1 and Formula 2 below. $y - 0.52 x - 4.7 ≧ 0$ (Formula 1) $y + 0.50 x - 4.8 ≦ 0$ (Formula 2).

The present inventors focused on the adhesion force and interaction force between a two-dimensional material and an adhesive. It is believed that, when the peel force of the adhesive layer of the adhesive sheet before curing is excessively high, the two-dimensional material and the adhesive adhere too strongly to each other, and therefore the two-dimensional material is damaged during release even if the peel force is reduced after curing. It is also believed that, when the HSP polar term of the polymer is excessively low, the interaction between the two-dimensional material and the adhesive is reduced, and the two-dimensional material is damaged during separation from the first substrate. Based on this, as shown in Examples and Comparative Examples described below, the present inventors experimentally found that, when the adhesive sheet satisfies the relationship represented by Formula 1 above, both favorable low-contamination properties and a high transfer rate when the adhesive sheet is used for transfer of a two-dimensional material can be achieved.

On the other hand, even when the HSP polar term of the polymer is relatively low, it is considered that, if the peel force of the adhesive layer of the adhesive sheet before curing is within a certain range, interaction between the two-dimensional material and the adhesive can be maintained. Based on this, as shown in Examples and Comparative Examples described below, it was experimentally found that, also when the adhesive sheet satisfies the relationship of Formula 2 above, favorable low-contamination properties and a high transfer rate when the adhesive sheet is used for transfer of a two-dimensional material can both be achieved.

The adhesive sheet according to the second aspect need only satisfy at least one of the relationships of Formula 1 and Formula 2 above, and may satisfy both relationships. The adhesive sheet according to the second aspect preferably satisfies either one of the relationships of Formula 1 and Formula 2 above. Which of Formula 1 and Formula 2 is satisfied by the adhesive sheet according to the second aspect can be selected according to the two-dimensional material to be transferred using the adhesive sheet.

In the adhesive sheet according to the first aspect, for the same reasons as described above, it is preferable that the peel force x (N/20 mm) of the adhesive layer before curing, measured at 23°C with respect to a silicon wafer when 180° peeling is performed at a tensile speed of 300 mm/min, and the HSP polar term y (MPa^{0.5}) of the polymer satisfy at least one of the relationships represented by Formula 1 and Formula 2 above.

In the adhesive sheet of the present embodiment, the peel force, measured at 23°C after curing, of the adhesive layer with respect to a silicon wafer (180° peel force with respect to a silicon wafer), when 180° peeling is performed at a tensile speed of 300 mm/min, is preferably 1.0 N/20 mm or less, more preferably 0.5 N/20 mm or less, and still more preferably 0.1 N/20 mm or less, in view of re-peelability. The peel force is, for example, 0.001 N/20 mm or more.

When the peel force is measured, the measurement is performed after ultraviolet light is irradiated from the base-material side of the adhesive sheet at an irradiation dose of 450 mJ/cm², in the same manner as under the conditions described in the Examples.

In the adhesive sheet of the present embodiment, the HSP polar term of the polymer having a radical-reactive carbon-carbon double bond in a side chain and contained in the adhesive layer is preferably 0 to 15 MPa^{0.5}. In view of developing adhesive force by polar interaction, the HSP polar term is preferably 2 MPa^{0.5} or more, more preferably 3 MPa^{0.5} or more, and still more preferably 4 MPa^{0.5} or more. In view of maintaining flexibility of the adhesive, the HSP polar term is preferably 15 MPa^{0.5} or less, more preferably 10 MPa^{0.5} or less, still more preferably 9 MPa^{0.5} or less, and particularly preferably 8 MPa^{0.5} or less.

The HSP polar term can be calculated by the method described in the Examples.

Preferred aspects of an adhesive composition for forming the adhesive layer in the adhesive sheet of the present embodiment will be described below.

In the present embodiment, the adhesive composition is an active energy ray-curable adhesive composition containing, as a base polymer, a polymer having a radical-reactive carbon-carbon double bond (hereinafter, also referred to as a carbon-carbon unsaturated double bond) in a side chain.

The base polymer may be a polymer having a carbon-carbon unsaturated double bond only in a side chain, or may be a polymer having a carbon-carbon unsaturated double bond in a side chain and at a terminal.

Examples of the base polymer include a (meth)acrylic polymer, a vinyl alkyl ether polymer, a silicone polymer, a polyester polymer, a polyamide polymer, a urethane polymer, and a styrene-diene block copolymer, and a (meth)acrylic polymer is preferably used. By using a (meth)acrylic polymer, the storage elastic modulus and tensile elastic modulus of the adhesive layer can be readily adjusted, and an adhesive composition having a favorable balance between adhesive force and peelability can be obtained. Further, contamination of an adherend due to components derived from the adhesive can be reduced. "(Meth)acrylic" means acrylic and/or methacrylic.

The weight-average molecular weight of the base polymer is preferably 300,000 or more, more preferably 400,000 or more, and still more preferably 600,000 to 1,000,000. Within such a range, bleeding of low-molecular-weight components can be prevented, and a low-contamination adhesive composition can be obtained. The molecular weight distribution (weight average molecular weight/number average molecular weight) of the base polymer is preferably 1 to 20, and more preferably 3 to 10. By using a base polymer having a narrow molecular weight distribution, bleeding of low-molecular-weight components can be prevented, and a low-contamination adhesive composition can be obtained. The weight average molecular weight and the number average molecular weight can be determined by gel permeation chromatography measurement (solvent: tetrahydrofuran, in terms of polystyrene).

One embodiment of the adhesive composition used in the adhesive sheet of the present embodiment includes a base polymer and a photopolymerization initiator. This base polymer is, for example, a polymer obtained by reacting a monomer composition containing a polymer and a monomer having a carbon-carbon unsaturated double bond. In this example, suitable components are appropriately selected such that the carbon-carbon unsaturated double bond is introduced into a side chain of the polymer. In the present specification, the monomer composition may be a composition containing only monomers, or may be a composition containing monomers and any other component such as an oligomer and a polymer.

The base polymer is obtained, for example, by reacting a monomer composition (hereinafter also referred to as "base-polymer monomer composition 1") containing a polymer having a hydroxyl group and a monomer having a functional group including a carbon-carbon unsaturated double bond and an isocyanate group. By reacting the base-polymer monomer composition 1, the monomer having a functional group containing a carbon-carbon unsaturated double bond and an isocyanate group can undergo an addition reaction with the polymer having a hydroxyl group. As a result, a polymer is obtained that has a structural unit derived from the monomer having a functional group containing a carbon-carbon unsaturated double bond and an isocyanate group.

As the polymer having a hydroxyl group, a polymer obtained by introducing a hydroxyl group into a side chain of any suitable polymer may be used. Examples thereof include polymers obtained by introducing a hydroxyl group into side chains of polymers such as a (meth)acrylic polymer, a vinyl alkyl ether polymer, a silicone polymer, a polyester polymer, a polyamide polymer, a urethane polymer, and a styrene-diene block copolymer. Preferably, a polymer obtained by introducing a hydroxyl group into a side chain of a (meth)acrylic polymer is used.

The (meth)acrylic polymer having a hydroxyl group can be obtained, for example, by polymerizing a monomer composition including an ester of acrylic acid or methacrylic acid having any suitable linear or branched alkyl group, and a monomer having a hydroxyl group. The ester of acrylic acid or methacrylic acid having a linear or branched alkyl group may be used alone, or two or more thereof may be used in combination.

The linear or branched alkyl group is preferably an alkyl group having 30 or fewer carbon atoms, more preferably an alkyl group having 1 to 20 carbon atoms, and still more preferably an alkyl group having 4 to 18 carbon atoms. Specific examples of the alkyl group include a methyl group, an ethyl group, a propyl group, an isopropyl group, an n-butyl group, a t-butyl group, an isobutyl group, an amyl group, an isoamyl group, a hexyl group, a heptyl group, a cyclohexyl group, a 2-ethylhexyl group, an octyl group, an isooctyl group, a nonyl group, an isononyl group, a decyl group, an isodecyl group, an undecyl group, a lauryl group, a tridecyl group, a tetradecyl group, a stearyl group, an octadecyl group, and a dodecyl group.

As the hydroxyl-group-containing monomer, any suitable monomer may be used. Examples thereof include 2-hydroxymethyl acrylate, 2-hydroxyethyl acrylate, 2-hydroxypropyl acrylate, 3-hydroxypropyl acrylate, 4-hydroxybutyl acrylate, 2-hydroxymethyl methacrylate, 2-hydroxyethyl methacrylate, and N-(2-hydroxyethyl)acrylamide. Preferably, 2-hydroxymethyl acrylate, 2-hydroxyethyl acrylate, 4-hydroxybutyl acrylate, 2-hydroxymethyl methacrylate, and 2-hydroxyethyl methacrylate are used. These monomers may be used alone, or two or more thereof may be used in combination.

The hydroxyl-group-containing monomer is preferably 5 mol% to 40 mol%, more preferably 15 mol% to 30 mol%, and still more preferably 20 mol% to 25 mol%, relative to 100 mol% of all monomer components in the monomer composition used for polymerization of the polymer having a hydroxyl group. By polymerizing a monomer composition including the hydroxyl-group-containing monomer, a polymer having a hydroxyl group is obtained. This hydroxyl group can serve as an introduction site for a structural unit derived from a monomer having a functional group including a carbon-carbon unsaturated double bond and an isocyanate group. For example, by reacting a polymer having a hydroxyl group (prepolymer) with a monomer having a functional group including a carbon-carbon unsaturated double bond and an isocyanate group, a base polymer having a carbon-carbon unsaturated double bond is obtained.

For the purpose of modifying cohesive force, heat resistance, crosslinkability, and the like, other monomer components copolymerizable with the above (meth)acrylic acid alkyl ester may optionally be further used. Examples of such monomer components include carboxyl-group-containing monomers such as acrylic acid and methacrylic acid; acid anhydride monomers such as maleic anhydride and itaconic anhydride; sulfonic-acid-group-containing monomers such as styrenesulfonic acid and allylsulfonic acid; (N-substituted) amide monomers such as (meth)acrylamide, N,N-dimethyl(meth)acrylamide, and acryloyl morpholine; (meth)acrylic acid aminoalkyl monomers such as aminoethyl (meth)acrylate; (meth)acrylic acid alkoxyalkyl monomers such as methoxyethyl (meth)acrylate; maleimide monomers such as N-cyclohexylmaleimide and N-isopropylmaleimide; itaconimide monomers such as N-methylitaconimide and N-ethylitaconimide; succinimide monomers; vinyl monomers such as vinyl acetate, vinyl propionate, N-vinylpyrrolidone, and methylvinylpyrrolidone; cyanoacrylate monomers such as acrylonitrile and methacrylonitrile; epoxy-group-containing acrylic monomers such as glycidyl (meth)acrylate; glycol-based acrylic ester monomers such as polyethylene glycol (meth)acrylate and polypropylene glycol (meth)acrylate; acrylic ester monomers having a heterocyclic ring, a halogen atom, a silicon atom, or the like, such as tetrahydrofurfuryl (meth)acrylate, fluorinated (meth)acrylate, and silicone (meth)acrylate; olefin monomers such as isoprene, butadiene, and isobutylene; and vinyl ether monomers such as vinyl ether. These monomer components may be used alone, or two or more thereof may be used in combination.

The content of the other monomer components copolymerizable with the (meth)acrylic acid alkyl ester in the monomer composition may be any suitable amount. Specifically, the other monomer components copolymerizable with the (meth)acrylic acid alkyl ester are used such that the total of the (meth)acrylic acid alkyl ester, the hydroxyl-group-containing monomer, and the optional other monomer components copolymerizable with the (meth)acrylic acid alkyl ester is 100 mol%.

The polymer having a hydroxyl group can be obtained by any suitable method. For example, the (meth)acrylic polymer having a hydroxyl group can be obtained by polymerizing, by any suitable polymerization method, a monomer composition including a (meth)acrylic acid alkyl ester, a hydroxyl-group-containing monomer, and optional other monomer components copolymerizable with the (meth)acrylic acid alkyl ester.

As described above, the base polymer of the adhesive composition is, for example, a polymer obtained by reacting the above polymer having a hydroxyl group with a monomer composition including a monomer having a functional group including a carbon-carbon unsaturated double bond and an isocyanate group. By reacting the hydroxyl group of the polymer having a hydroxyl group with the isocyanate group of the monomer having a functional group including a carbon-carbon unsaturated double bond and an isocyanate group, a base polymer into which a carbon-carbon unsaturated double bond has been introduced is obtained. By using this base polymer, it is possible to provide an adhesive composition having favorable filling properties for irregularities and adhesiveness, while being capable of preventing adhesive residue from remaining on an adherend upon peeling.

Examples of the monomer having a functional group including a carbon-carbon unsaturated double bond and an isocyanate group include monomers having an acryloyl group or a methacryloyl group and also having an isocyanate group, such as 2-(2-methacryloyloxyethyloxy)ethyl isocyanate, 2-isocyanatoethyl acrylate (2-acryloyloxyethyl isocyanate), 2-isocyanatoethyl methacrylate (2-methacryloyloxyethyl isocyanate), methacryloyl isocyanate, 1,1-(bisacryloyloxymethyl)ethyl isocyanate, and m-isopropenyl-α,α-dimethylbenzyl isocyanate. These may be used alone, or two or more thereof may be used in combination.

The amount of the monomer having a carbon-carbon unsaturated double bond and an isocyanate group added relative to the number of moles of the hydroxyl groups of the polymer having a hydroxyl group is preferably 10 mol% to 90 mol%, more preferably 30 mol% to 85 mol%, and still more preferably 50 mol% to 80 mol%. When the amount of the monomer having a carbon-carbon unsaturated double bond and an isocyanate group added is within the above range, the adhesive composition can be satisfactorily cured by irradiation with active energy rays, and an adhesive composition having favorable peelability is provided. When the amount of the monomer having a carbon-carbon unsaturated double bond and an isocyanate group added exceeds 90 mol%, the number of reaction sites with a crosslinking agent may become too small, and a sufficient crosslinking effect may not be obtained.

Further, for example, monomers constituting a (meth)acrylic polymer can be broadly classified into hydrophilic monomers, hydrophobic monomers, and monomers other than hydrophilic monomers and hydrophobic monomers.

As the hydrophilic monomer, any suitable monomer having a polar group can be used. Specific examples include carboxyl-group-containing monomers such as acrylic acid, methacrylic acid, carboxyethyl acrylate, carboxypentyl acrylate, itaconic acid, maleic acid, fumaric acid, and crotonic acid; acid anhydride monomers such as maleic anhydride and itaconic anhydride; hydroxyl-group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl methacrylate; sulfonic-acid-group-containing monomers such as styrenesulfonic acid, allylsulfonic acid, 2-(meth)acrylamide-2-methylpropanesulfonic acid, (meth)acrylamidepropanesulfonic acid, sulfopropyl (meth)acrylate, and (meth)acryloyloxynaphthalenesulfonic acid; phosphate-group-containing monomers such as 2-hydroxyethyl acryloyl phosphate; (N-substituted) amide monomers such as (meth)acrylamide, N,N-dimethyl(meth)acrylamide, N-butyl(meth)acrylamide, N-methylol(meth)acrylamide, N-methylolpropane (meth)acrylamide, and acryloyl morpholine; (meth)acrylic acid aminoalkyl monomers such as aminoethyl (meth)acrylate, N,N-dimethylaminoethyl (meth)acrylate, and t-butylaminoethyl (meth)acrylate; (meth)acrylic acid alkoxyalkyl monomers such as methoxyethyl (meth)acrylate and ethoxyethyl (meth)acrylate; maleimide monomers such as N-cyclohexylmaleimide, N-isopropylmaleimide, N-laurylmaleimide, and N-phenylmaleimide; itaconimide monomers such as N-methylitaconimide, N-ethylitaconimide, N-butylitaconimide, N-octylitaconimide, N-2-ethylhexylitaconimide, N-cyclohexylitaconimide, and N-laurylitaconimide; succinimide monomers such as N-(meth)acryloyloxymethylene succinimide, N-(meth)acryloyl-6-oxyhexamethylene succinimide, and N-(meth)acryloyl-8-oxyoctamethylene succinimide; vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinyl carboxamides, styrene, α-methylstyrene, and N-vinylcaprolactam; cyanoacrylate monomers such as acrylonitrile and methacrylonitrile; epoxy-group-containing acrylic monomers such as glycidyl (meth)acrylate; glycol-based acrylic ester monomers such as polyethylene glycol (meth)acrylate, polypropylene glycol (meth)acrylate, methoxyethylene glycol (meth)acrylate, and methoxypolypropylene glycol (meth)acrylate; acrylic ester monomers having a heterocyclic ring, a halogen atom, a silicon atom, or the like, such as tetrahydrofurfuryl (meth)acrylate, fluorinated (meth)acrylate, and silicon-containing (meth)acrylate; and polyfunctional monomers such as hexanediol di(meth)acrylate, (poly)ethylene glycol di(meth)acrylate, (poly)propylene glycol di(meth)acrylate, neopentyl glycol di(meth)acrylate, pentaerythritol di(meth)acrylate, trimethylolpropane tri(meth)acrylate, pentaerythritol tri(meth)acrylate, dipentaerythritol hexa(meth)acrylate, epoxy acrylate, polyester acrylate, and urethane acrylate. As the hydrophilic monomer, a hydroxyl-group-containing monomer and/or an (N-substituted) amide monomer can be suitably used. The hydrophilic monomer may be used alone, or two or more thereof may be used in combination.

As the hydrophobic monomer, any suitable monomer may be used as long as it is hydrophobic. Specific examples include vinyl alkyl ethers or aryl ethers having an alkyl group having 9 to 30 carbon atoms, such as vinyl 2-ethylhexanoate, vinyl laurate, vinyl stearate, and stearyl vinyl ether; alkyl esters of (meth)acrylic acid having 6 to 30 carbon atoms, such as hexyl (meth)acrylate, heptyl (meth)acrylate, octyl (meth)acrylate, isooctyl acrylate, isononyl acrylate, decyl (meth)acrylate, isodecyl (meth)acrylate, dodecyl (meth)acrylate, 2-ethylhexyl (meth)acrylate, benzyl (meth)acrylate, lauryl (meth)acrylate, oleyl (meth)acrylate, palmityl (meth)acrylate, and stearyl (meth)acrylate; unsaturated vinyl esters of (meth)acrylic acid derived from fatty acids and aliphatic alcohols; monomers derived from cholesterol; and olefin monomers such as 1-butene, 2-butene, 1-pentene, 1-hexene, 1-octene, isobutylene, and isoprene. The hydrophobic monomer may be used alone, or two or more thereof may be used in combination. In the present invention, the hydrophobic monomer means a monomer having a solubility of 0.02 g or less in 100 g of water.

The base polymer may further include monomer components other than the hydrophilic monomer and the hydrophobic monomer. Examples of such other monomer components include alkyl acrylates such as butyl acrylate and ethyl acrylate. The other monomer component may be used alone, or two or more thereof may be used in combination.

When a polymer having a hydroxyl group is used, the proportion of hydrophilic monomers other than the hydroxyl-group-containing monomer relative to 100 mol% of the total amount of monomer components other than the hydroxyl-group-containing monomer is preferably 0 to 50 mol%, more preferably 0 to 45 mol%, and still more preferably 0 to 40 mol%. Further, when the proportion of hydrophilic monomers other than the hydroxyl-group-containing monomer relative to 100 mol% of the total amount of monomer components other than the hydroxyl-group-containing monomer is 50 mol% or less, the polarity of the adhesive is not excessively increased, so that water resistance and moisture resistance can be maintained, and the adhesive force can also be maintained because the cohesive force does not become excessively high. The above proportion is preferably as low as possible, but may be, for example, 5 mol% or more, 15 mol% or more, or 25 mol% or more.

Although the foregoing description has mainly been directed to a case in which the base polymer is obtained by reacting a monomer composition for a base polymer (base-polymer monomer composition 1) including a polymer having a hydroxyl group and a monomer having a carbon-carbon unsaturated double bond and an isocyanate group, the base polymer is not limited thereto.

That is, the base polymer can be produced, for example, by a method in which a polymer having a reactive functional group (a first functional group) and a compound having a functional group capable of reacting with the first functional group to form a bond (a second functional group) and a functional group including a carbon-carbon unsaturated double bond are reacted and bonded while maintaining the radiation polymerizability of the carbon-carbon unsaturated double bond. Accordingly, the base polymer preferably includes a structural portion derived from the polymer having the first functional group and a structural portion derived from the compound having the second functional group and the carbon-carbon unsaturated double bond.

Examples of the functional group including a carbon-carbon unsaturated bond include, in addition to an acryloyl group and a methacryloyl group, a vinyl group, a propenyl group, and an isopropenyl group.

Examples of the combination of the first functional group and the second functional group include a carboxy group and an epoxy group, an epoxy group and a carboxy group, a carboxy group and an aziridyl group, an aziridyl group and a carboxy group, a hydroxy group and an isocyanate group, and an isocyanate group and a hydroxy group. Among these, in view of ease of reaction tracking, a combination of a hydroxy group and an isocyanate group and a combination of an isocyanate group and a hydroxy group are preferred. The above combination may be used alone, or two or more thereof may be used.

The base polymer can be produced, for example, by a method in which, after raw material monomers including a monomer component having the first functional group are polymerized (copolymerized) to obtain a polymer having the first functional group, a compound having the second functional group and a carbon-carbon unsaturated double bond is caused to undergo a condensation reaction or an addition reaction with the polymer while maintaining the radiation polymerizability of the carbon-carbon unsaturated double bond.

In polymerization of the monomer components, various common solvents may be used. Examples of the solvent include organic solvents such as esters including ethyl acetate and n-butyl acetate; aromatic hydrocarbons including toluene and benzene; aliphatic hydrocarbons including n-hexane and n-heptane; alicyclic hydrocarbons including cyclohexane and methylcyclohexane; and ketones including methyl ethyl ketone and methyl isobutyl ketone. The solvent may be used alone, or two or more thereof may be used.

A polymerization initiator, chain transfer agent, emulsifier, and the like used for radical polymerization of the monomer components are not particularly limited, and may be selected and used. The weight-average molecular weight of the polymer can be controlled by the amounts of the polymerization initiator and the chain transfer agent used and by the reaction conditions, and the amounts thereof used are appropriately adjusted according to the types thereof.

As the polymerization initiator used for polymerization of the monomer components, a thermal polymerization initiator, a photopolymerization initiator (photoinitiator), or the like can be used depending on the type of polymerization reaction. The polymerization initiator may be used alone, or two or more thereof may be used in combination.

The thermal polymerization initiator is not particularly limited, and examples thereof include an azo polymerization initiator, a peroxide polymerization initiator, and a redox polymerization initiator. The amount of the thermal polymerization initiator used is preferably 1 part by mass or less, more preferably 0.005 to 1 part by mass, and still more preferably 0.02 to 0.5 part by mass, relative to 100 parts by mass of the total monomer components constituting the polymer having the first functional group.

As the photopolymerization initiator used for polymerization of the monomer components, those exemplified below as photopolymerization initiators contained in the adhesive composition may be used.

The reaction between the polymer having the first functional group and the compound having the second functional group and the functional group containing a carbon-carbon unsaturated double bond can be performed, for example, by stirring in a solvent in the presence of a catalyst. Examples of the solvent include those described above. The catalyst is appropriately selected according to the combination of the first functional group and the second functional group. In the reaction, the reaction temperature is, for example, 5 to 100°C, and the reaction time is, for example, 1 to 36 hours.

In addition to the base polymer, the adhesive composition of this embodiment contains a photopolymerization initiator.

As the photopolymerization initiator that may be contained in the adhesive composition, any suitable initiator may be used. Examples of the photopolymerization initiator include acylphosphine oxide photoinitiators such as ethyl 2,4,6-trimethylbenzyl phenylphosphinate and (2,4,6-trimethylbenzoyl)-phenylphosphine oxide; α-ketol compounds such as 4-(2-hydroxyethoxy)phenyl(2-hydroxy-2-propyl) ketone, α-hydroxy-α,α'-dimethylacetophenone, 2-methyl-2-hydroxypropiophenone, and 1-hydroxycyclohexyl phenyl ketone; acetophenone compounds such as methoxyacetophenone, 2,2-dimethoxy-2-phenylacetophenone, 2,2-diethoxyacetophenone, and 2-methyl-1-[4-(methylthio)-phenyl]-2-morpholinopropan-1-one; benzoin ether compounds such as benzoin ethyl ether, benzoin isopropyl ether, and anisoin methyl ether; ketal compounds such as benzyl dimethyl ketal; aromatic sulfonyl chloride compounds such as 2-naphthalenesulfonyl chloride; photoactive oxime compounds such as 1-phenone-1,1-propanedione-2-(o-ethoxycarbonyl)oxime; benzophenone compounds such as benzophenone, benzoyl benzoic acid, and 3,3'-dimethyl-4-methoxybenzophenone; thioxanthone compounds such as thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, and 2,4-diisopropylthioxanthone; camphorquinone; halogenated ketones; acylphosphonates; and α-hydroxyacetophenones such as 2-hydroxy-1-(4-(4-(2-hydroxy-2-methylpropionyl)benzyl)phenyl)-2-methylpropan-1-one. Preferred examples include 2,2-dimethoxy-2-phenylacetophenone and 2-hydroxy-1-(4-(4-(2-hydroxy-2-methylpropionyl)benzyl)phenyl)-2-methylpropan-1-one. The photopolymerization initiator may be used alone, or two or more thereof may be used in combination.

As the photopolymerization initiator, commercially available products may also be used. Examples include products under the trade names Omnirad 127D and Omnirad 651, manufactured by IGM Resins.

The photopolymerization initiator may be used in any suitable amount. The content of the photopolymerization initiator is preferably 0.5 to 20 parts by mass, and more preferably 0.5 to 10 parts by mass, relative to 100 parts by mass of the base polymer. If the content of the photopolymerization initiator is less than 0.5 part by mass, sufficient curing may not be achieved upon irradiation with active energy rays. If the content of the photopolymerization initiator exceeds 20 parts by mass, storage stability of the adhesive composition may decrease.

The adhesive composition may further include any suitable additive. Examples of the additive include a crosslinking agent, a catalyst (for example, a platinum catalyst), a tackifier, a plasticizer, a pigment, a dye, a filler, an antioxidant, a conductive material, an ultraviolet absorber, a light stabilizer, a release modifier, a softening agent, a surfactant, a flame retardant, and a solvent.

The adhesive composition preferably further includes a crosslinking agent. Examples of the crosslinking agent include an isocyanate-based crosslinking agent, an epoxy-based crosslinking agent, an aziridine-based crosslinking agent, and a chelate-based crosslinking agent. The content of the crosslinking agent may be adjusted to any suitable amount, but is preferably 0.5 to 20 parts by mass, more preferably 4 to 15 parts by mass, and still more preferably 6 to 12 parts by mass, relative to 100 parts by mass of the base polymer. The flexibility of the adhesive layer formed by the adhesive composition can be controlled by the content of the crosslinking agent. When the content of the crosslinking agent is 0.5 part by mass or more, an appropriate cohesive force can be obtained, which is preferable. When the content of the crosslinking agent is 20 parts by mass or less, an appropriate adhesive force can be obtained, which is preferable.

As the crosslinking agent, an isocyanate-based crosslinking agent is preferably used. An isocyanate-based crosslinking agent is preferred because it can react with various functional groups. Particularly preferably, a crosslinking agent having three or more isocyanate groups is used. By using an isocyanate-based crosslinking agent as the crosslinking agent and setting the content of the crosslinking agent within the above range, it is possible to form an adhesive layer having favorable peelability and markedly reduced adhesive residue even after heating.

The adhesive layer may also contain a thermoplastic resin. Examples of the thermoplastic resin include natural or synthetic rubbers such as natural rubber, polyisobutylene, polyisoprene, chloroprene rubber, butyl rubber, and nitrile butyl rubber; olefin elastomers such as an ethylene-propylene copolymer, an ethylene-propylene-diene copolymer, an ethylene-vinyl acetate copolymer, polybutene, and chlorinated polyethylene; styrene elastomers such as a styrene-butadiene-styrene copolymer, a styrene-isoprene-styrene copolymer, and hydrogenated products thereof; polyester elastomers; polyamide elastomers; and various thermoplastic elastomers such as polyurethane elastomers. These rubber components or thermoplastic elastomer components may be used alone or in a combination of two or more.

The adhesive layer can be produced, for example, by applying (coating) an adhesive composition for forming the adhesive layer onto a release liner and drying the resulting adhesive composition layer, or by applying (coating) the adhesive composition onto a release liner. If necessary, heating and drying may be further performed.

The thickness of the adhesive layer is not particularly limited, but in view of exhibiting good adhesiveness to the two-dimensional material, it is preferably 2 µm or more, more preferably 5 µm or more, and still more preferably 10 µm or more, and in view of formability of a smooth adhesive layer, it is preferably 500 µm or less, more preferably 100 µm or less, and still more preferably 50 µm or less.

Examples of the base material forming the adhesive sheet include those made of a resin, a nonwoven fabric, a woven fabric, a metal foil, paper, and the like. Among these, in view of smoothness, handleability, cost, and the like, a base material made of a resin (resin base material) is preferred.

Specific examples of the resin forming the base material include polyester resins such as polyethylene terephthalate (PET), polyethylene naphthalate (PEN), polybutylene terephthalate (PBT), and polybutylene naphthalate (PBN); polyolefin resins such as an ethylene-vinyl acetate copolymer (EVA), an ethylene-methyl methacrylate copolymer, polyethylene, polypropylene, and an ethylene-propylene copolymer; polyurethane resins; polyvinyl alcohol; polyvinylidene chloride; polyvinyl chloride; a vinyl chloride-vinyl acetate copolymer; polyvinyl acetate; polyamide; polyimide; cellulose; fluororesins; polyether; polystyrene-based resins such as polystyrene; polycarbonate; and polyether sulfone. Among these, in view of tensile elastic modulus with flexibility, an ethylene-vinyl acetate copolymer (EVA), a polyolefin resin, and a polyurethane resin are preferred, and an ethylene-vinyl acetate copolymer (EVA) is particularly preferred.

The thickness of the base material may be set to any suitable value. The thickness of the base material is preferably 10 µm to 300 µm, and more preferably 50 µm to 150 µm.

As the base material, an unstretched film may be used, or a film subjected to uniaxial or biaxial stretching treatment may be used as necessary.

Further, the base material preferably has a property of transmitting active energy rays such as ultraviolet light.

The tensile elastic modulus of the base material is preferably 10 MPa to 4000 MPa. In view of handleability of the adhesive tape, the tensile elastic modulus of the base material is preferably 10 MPa or more, more preferably 30 MPa or more, and still more preferably 50 MPa or more. Further, the tensile elastic modulus of the base material is preferably 4000 MPa or less, more preferably 1000 MPa or less, and still more preferably 100 MPa or less. When the tensile elastic modulus of the base material is 4000 MPa or less, large bending stress is less likely to be applied when peeling occurs between the first substrate and the two-dimensional material, and stable peeling can be achieved.

The tensile elastic modulus of the base material is a tensile elastic modulus at 23°C.

Specifically, the tensile elastic modulus of the base material can be calculated as follows.

A sample of the base material having a width of 10 mm and a length of 20 mm is prepared. Upper and lower 5-mm portions of the sample in the length direction are gripped so that the distance between grips is 10 mm, and the sample is pulled at a speed of 50 mm/min. Using a tensile tester, an initial tensile elastic modulus calculated from the slope at a point at which the slope of stress with respect to strain is maximum between 10% strain and 100% strain is measured, and this initial tensile elastic modulus is defined as the tensile elastic modulus of the base material. When the base material has anisotropy such that the tensile elastic modulus differs depending on the tensile direction, an average of tensile elastic moduli obtained when the base material is pulled in at least two orthogonal in-plane directions is used. For example, an average value of respective values measured with two orthogonal in-plane directions (an MD direction and a TD direction) as the long-side direction (length direction), is used.

### (Method for Manufacturing Adhesive Sheet)

The adhesive sheet can be manufactured by any suitable method. In the embodiment, the adhesive sheet can be produced by forming an adhesive layer on a base material. The adhesive layer may be formed by applying, to the base material, the composition for forming the adhesive layer to form the adhesive layer, or the adhesive layer may be formed on any suitable release liner and then transferred to the base material. As the coating method, various methods may be employed, such as bar coating, air-knife coating, gravure coating, reverse gravure coating, reverse-roll coating, lip coating, slot-die coating, dip coating, offset printing, flexographic printing, and screen printing.

### [Method for Transferring Two-Dimensional Material]

The adhesive sheet of the present embodiment achieves a high transfer rate of a two-dimensional material and also has favorable low-contamination properties. Therefore, the adhesive sheet is suitably used, for example, in applications for transferring a two-dimensional material.

An example of a method for transferring a two-dimensional material using the adhesive sheet of the present embodiment will be described below as a method for manufacturing a laminate or a method for manufacturing a two-dimensional material laminate.

One example of a method for manufacturing a laminate will now be described.

### (Preliminary Step)

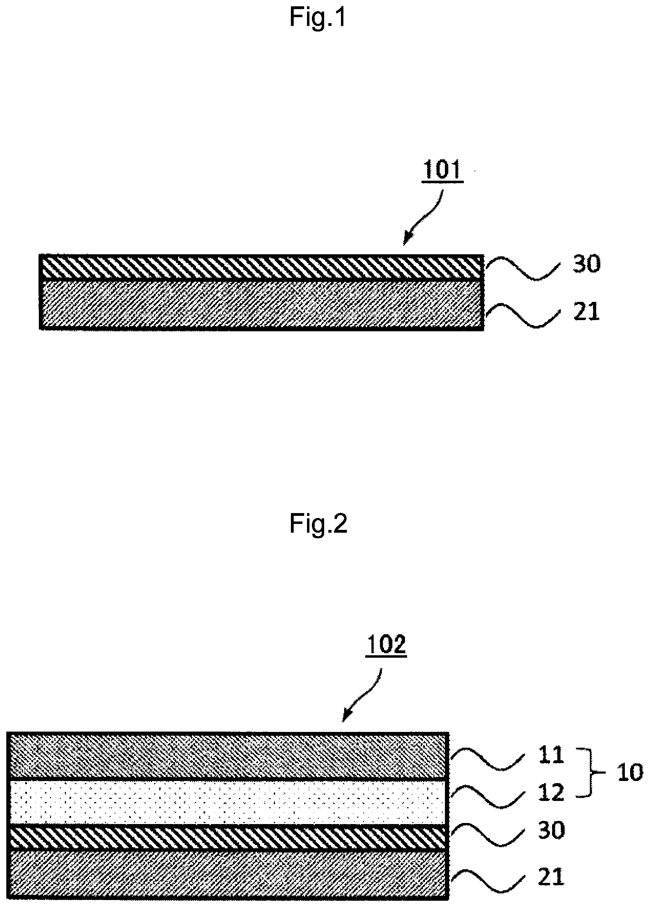

Fig. 1 is a schematic cross-sectional view showing a laminate 101 having a two-dimensional material 30 on a first substrate 21. The laminate 101 may also be referred to as a first laminate.

In the method for manufacturing a laminate according to the present example, first, as a preliminary step, the two-dimensional material 30 is formed on the first substrate 21.

The first substrate 21 is not particularly limited, and may be any of a metal substrate, a ceramic substrate, a silicon substrate, a resin substrate, and the like.

Examples of the first substrate 21 include a metal substrate made of a single transition metal such as copper, nickel, cobalt, iron, chromium, gold, platinum, molybdenum, or tungsten; an alloy metal substrate of these metals; single-crystal substrates such as sapphire, magnesia, spinel, mica, SiC, SiN, and Si, and substrates obtained by oxidizing surfaces of such single-crystal substrates; a quartz substrate; a substrate for forming a two-dimensional material, in which a thin film of any of the above-listed transition metals is formed on a surface of each of these substrates; and a substrate on which a two-dimensional material is formed on each of the above substrates. The first substrate 21 is preferably a substrate for forming a two-dimensional material.

The method for forming the two-dimensional material on the metal substrate for film formation is not particularly limited, and a CVD method is preferably used. Examples of the film formation method include thermal CVD in which a source gas is introduced in the presence of a catalytic metal and treatment is carried out by thermal decomposition of the source gas, and surface-wave microwave plasma chemical vapor deposition (CVD) in which treatment is carried out by microwave plasma. Any method may be used as long as the two-dimensional material 30 can be formed on the first substrate 21.

The two-dimensional material 30 is a material having a two-dimensional layered structure composed of one elemental species or two or more elemental species, and having an extremely thin sheet structure. Graphene, which is a two-dimensional sheet composed only of carbon, is a representative example thereof. The two-dimensional material 30 may also be a ribbon-shaped film having a width on the nanometer scale.

Examples of the two-dimensional material 30 include a two-dimensional carbon material, a transition metal chalcogenide, molybdenum disulfide, tungsten disulfide, hexagonal boron nitride (h-BN), black phosphorus, and derivatives thereof. A two-dimensional carbon material, molybdenum disulfide, tungsten disulfide, or hexagonal boron nitride is preferred.

The two-dimensional carbon material is preferably graphene or a graphene derivative.

Graphene is a film formed of sp²-bonded carbon atoms having a thickness of one atom, and forms a hexagonal lattice structure made of carbon atoms and bonds thereof. In the present specification, multilayer graphene in which these films are stacked in 2 to 100 layers is also referred to as "graphene."

The two-dimensional material 30 may be a single-layer material or a multilayer material. When the two-dimensional material includes multiple layers, the layers may be composed of the same material or may be composed of different materials.

Examples of the graphene derivative include graphene oxide, sulfonated graphene oxide, graphene hydroxide, graphene carbonate, graphene nitride, and the like, with graphene oxide being preferred.

As a pretreatment, the laminate 101 may be subjected to immersion in water. For example, when the two-dimensional material is graphene and the catalyst for graphene film formation in the laminate 101 is Cu, the laminate 101 is immersed in water at 4 to 100°C for 4 to 72 hours. By such treatment, water is intercalated at the interface between the graphene and the Cu, and the Cu surface is oxidized. During immersion, the water may be left undisturbed or may be stirred. By stirring the water, the Cu surface is more readily oxidized. Methods are also available in which oxidation of Cu is promoted by adding a metal salt such as potassium chloride or sodium chloride to water, and in which Cu is oxidized by contact with water vapor. However, in any of these methods, water is intercalated at the interface between the graphene and the Cu, and the Cu surface is oxidized.

By this oxidation, the interaction between the graphene and the Cu is weakened, so that transfer of the graphene to the adhesive sheet 10 in a subsequent step can be reliably performed.

### (Adhesive Sheet Attachment Step)

Fig. 2 is a schematic cross-sectional view showing a state in which the adhesive sheet 10 is attached to the two-dimensional material 30 on the first substrate 21. A laminate obtained by attaching the adhesive sheet 10 to the two-dimensional material 30 on the first substrate 21 is defined as a laminate 102. The laminate 102 in which the first substrate 21, the two-dimensional material 30, and the adhesive sheet 10 are laminated in that order may be referred to as a second laminate. In Fig. 2, an embodiment is shown in which, as the adhesive sheet 10, an adhesive sheet having an adhesive layer 12 on one side of a base material 11 is used.

In the method for manufacturing a laminate according to the present example, the adhesive sheet 10 is attached to the two-dimensional material 30 on the first substrate 21.

By placing the adhesive sheet 10 on the two-dimensional material 30 of the laminate 101, which includes the first substrate 21 and the two-dimensional material 30, the adhesive sheet 10 is attached to the two-dimensional material 30. Accordingly, the laminate 102 is obtained. In attaching the adhesive sheet 10 to the two-dimensional material 30, the two-dimensional material 30 and the adhesive sheet 10 may be pressure-bonded, for example, using a roller or the like.

After the laminate 102 is obtained, autoclave treatment may optionally be performed. The conditions for the autoclave treatment are not particularly limited. For example, the temperature is preferably 20 to 300°C, and more preferably 30 to 70°C. The pressure is preferably 1.1 to 20 atm, and more preferably 2 to 10 atm. The treatment time is preferably 1 to 120 minutes, and more preferably 10 to 60 minutes.

### Pre-Curing Step

The method for manufacturing a laminate according to the present example may include a pre-curing step after the adhesive sheet attachment step and before a bubble formation step described below. Whether to perform the pre-curing step or a post-curing step described below can be appropriately selected.

The pre-curing step is a step of curing the adhesive layer when the adhesive sheet 10 having an adhesive layer curable upon being supplied with active energy rays is used.

Hereinafter, an adhesive layer curable upon being supplied with active energy rays may be referred to as an active energy ray-curable adhesive layer. An adhesive sheet having an active energy ray-curable adhesive layer may be referred to as an active energy ray-curable adhesive sheet.

Since the adhesive sheet of the present embodiment is an active energy ray-curable adhesive sheet, in the adhesive sheet attachment step described above, the adhesive layer 12 of the adhesive sheet 10 readily conforms to the shape of the two-dimensional material. In addition, by performing a curing step before the bubble formation step and the separation step described below, the adhesive sheet 10 becomes sufficiently hard to suppress deformation of the two-dimensional material 30 when the laminate including the adhesive sheet 10 and the two-dimensional material 30 is separated from the first substrate 21 in the separation step. Accordingly, the two-dimensional material 30 can be separated from the first substrate 21 over a large area and in an undamaged or less damaged state. As a result, a two-dimensional material having a high transfer rate is readily obtained. In one aspect, when the two-dimensional material is graphene, graphene having a high transfer rate and high mobility is readily obtained.

### Bubble Formation Step

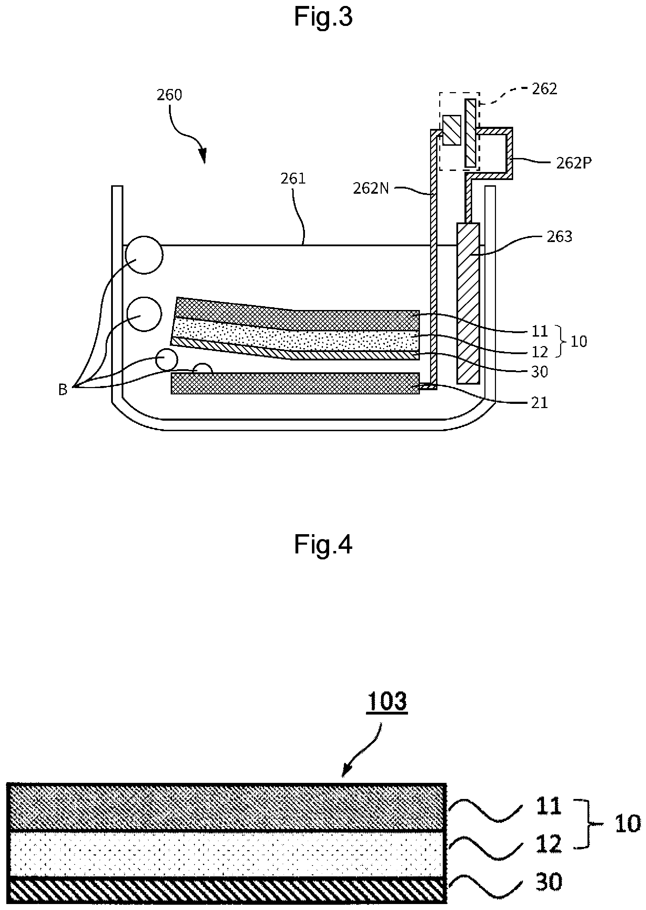

Fig. 3 is a schematic cross-sectional view showing a state in which bubbles B are formed between the first substrate 21 and the two-dimensional material 30. Fig. 3 shows a state in which, by formation of bubbles in the bubble formation step, separation of a laminate 103 including the adhesive sheet 10 and the two-dimensional material 30 from the first substrate 21 has occurred.

In the method for manufacturing a laminate according to the present embodiment, bubbles B are subsequently formed between the first substrate 21 and the two-dimensional material 30. In forming the bubbles B between the first substrate 21 and the two-dimensional material 30, a bubble formation unit 260 is used. The bubble formation unit 260 includes at least a solution 261, a voltage source 262 having a positive lead 262P and a negative lead 262N, such as a power supply or a battery, and an anode 263 located in the solution 261 and electrically connected to the positive lead 262P.

The laminate (second laminate) 102 is immersed in the solution 261 of the bubble formation unit 260. In a state in which the laminate (second laminate) 102 is immersed in the solution 261, the negative lead 262N is electrically connected to the first substrate 21 in the solution 261. Accordingly, the first substrate 21 functions as a cathode of the bubble formation unit 260.

The bubbles B are formed between the first substrate 21 and the two-dimensional material 30, for example, by an electrochemical reaction in the bubble formation unit 260. As one example, the electrochemical reaction is release of hydrogen by electrolysis of water in the solution 261, and the bubbles B are formed by the electrochemical reaction.

Specifically, when a potential is applied in the solution 261, a reduction reaction occurs at the negatively charged first substrate 21 (cathode), hydrogen gas is generated from the first substrate 21, and hydrogen bubbles B are formed on a conductive surface of the first substrate 21. As a result, the bubbles B are formed between the first substrate 21 and the two-dimensional material 30. In the bubble formation unit 260, the arrangement of the anode 263 is adjusted such that the bubbles B are formed in a concentrated manner between the first substrate 21 and the two-dimensional material 30.

The solution 261 includes water and at least one electrolyte, and preferably includes 0.01 mol to 10 mol of the electrolyte per liter of water.

The electrolyte is not particularly limited, and may be a single electrolyte or a combination of two or more electrolytes.

Examples of the electrolyte include sodium hydroxide, potassium hydroxide, sulfuric acid, sodium chloride, and any suitable combination thereof.

Instead of the bubble formation step and a separation step described below, a peel separation step in which peel separation is performed in a suitable liquid such as water may be employed.

### Separation Step

The method for manufacturing a laminate according to the present example includes a step of separating the laminate 103 including the adhesive sheet 10 and the two-dimensional material 30 from the first substrate 21. Fig. 4 shows a schematic cross-sectional view of the laminate 103 including the adhesive sheet 10 and the two-dimensional material 30. The laminate 103 may be referred to as a third laminate.

Separation of the laminate 103 including the adhesive sheet 10 and the two-dimensional material 30 from the first substrate 21 may occur through formation of bubbles in the bubble formation step described above, as shown in Fig. 3. In this case, the bubble formation step and the separation step may also be regarded as being performed simultaneously.

Alternatively, separation of the laminate 103 including the adhesive sheet 10 and the two-dimensional material 30 from the first substrate 21 may be performed after the bubble formation step described above by pulling at least one of the adhesive sheet 10 and the first substrate 21.

The laminate 103 separated from the first substrate 21 may optionally be washed with a suitable cleaning liquid such as pure water, including deionized water and distilled water, ultrapure water, or an alcohol such as ethanol or isopropyl alcohol.

Further, when the laminate 103 is separated from the first substrate 21 by pulling at least one of the adhesive sheet 10 and the first substrate 21 after the bubble formation step, the peel angle is not particularly limited and is usually 180 degrees or less. However, when the peel angle is relatively small, defects such as tearing and cracking in the two-dimensional material 30 can be prevented from occurring due to a change in shape of the laminate 103. For this reason, a smaller peel angle is preferred, and the peel angle is preferably 150 degrees or less, and more preferably 120 degrees or less. Further, the peel angle is preferably 0 degrees or more in view of avoiding an increase in the size of the peeling apparatus itself.

The peel angle refers to an angle formed between the first substrate 21 and a peeled portion of the laminate 103 when the laminate 103 is separated from the first substrate 21.

The peel rate when the laminate 103 is separated from the first substrate 21 is not particularly limited. However, when the peel rate is relatively high, the time during which a change in shape of the laminate 103 occurs is shortened, so that defects such as tearing and cracking in the two-dimensional material 30 can be prevented from occurring. For this reason, the peel rate is usually 1 mm/min or more, but a higher peel rate is preferred, with 10 mm/min or more being preferred and 100 mm/min or more being more preferred. Further, in view of stable operation of the apparatus, the peel rate is preferably 100000 mm/min or less, and more preferably 90000 mm/min or less.

The peel rate refers to the length by which the laminate 103 is peeled from the laminate 102 per unit time when the laminate 103 is separated from the laminate 102.

According to the method for manufacturing a laminate of the present example, the bubbles that weaken the interaction between the first substrate 21 and the two-dimensional material 30 with a gentle force can be efficiently formed, and therefore the two-dimensional material 30 can be separated without tearing or damage even when the two-dimensional material 30 has a large area. As a result, even when the two-dimensional material 30 has a large area, the laminate 103 can be manufactured such that the two-dimensional material 30 can be efficiently transferred at a high transfer rate. A large area is, for example, an area of 100 mm² or more. However, it will be readily understood that the method for manufacturing a laminate according to the present example is, of course, also applicable when the area of the two-dimensional material is relatively small, and such a case is also encompassed.

Next, an example of a method for manufacturing a two-dimensional material laminate will be described.

### (Placement Step)

In the method for manufacturing a two-dimensional material laminate according to the present example, first, the laminate obtained by the above-described method for manufacturing a laminate is placed on the second substrate such that the surface of the two-dimensional material of the laminate is in contact with the second substrate.

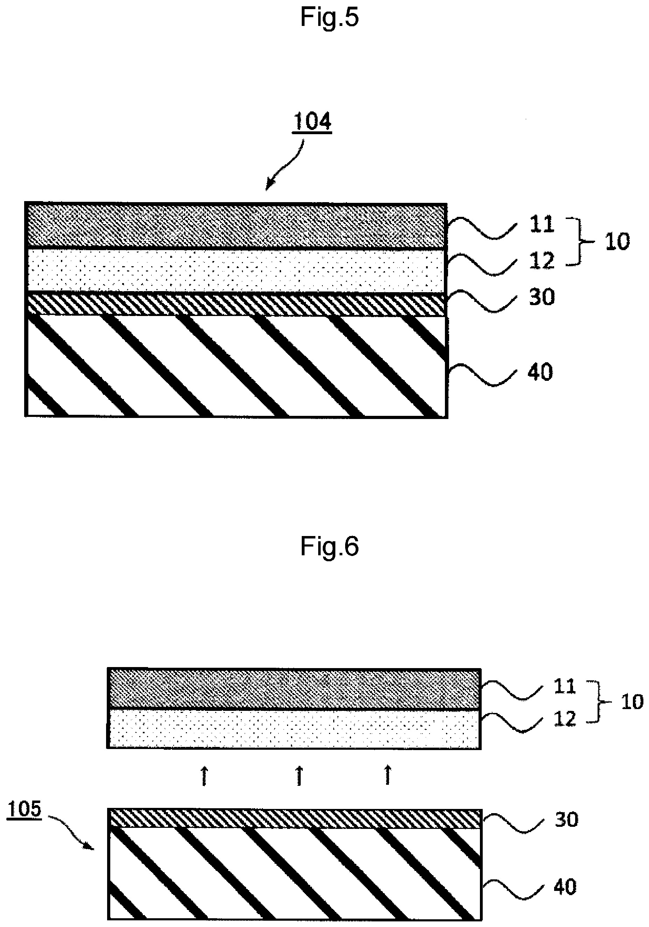

Fig. 5 is a schematic cross-sectional view showing a step (placement step) of placing the laminate 103 on the second substrate 40 such that the surface of the two-dimensional material 30 of the laminate 103 is in contact with the second substrate 40. Through the placement step, a laminate 104 is obtained in which the second substrate 40 and the laminate 103 are laminated.

When the laminate 103 is placed on the second substrate 40, the laminate 103 may optionally be placed on the second substrate in a state wetted with a suitable liquid such as water or an alcohol (liquid-assisted attachment), and then allowed to stand or dried. This increases the adhesion of the laminate 103 to the second substrate 40.

In placing the laminate 103 on the second substrate 40, the laminate 103 and the second substrate 40 may also be pressure-bonded, for example, using a roller or the like.

The laminate 103 may also be cut to an appropriate size as needed and arranged at any location on the second substrate 40. This allows the two-dimensional material to be placed at any desired location on the second substrate.

### (Post-Curing Step)

The method for manufacturing a two-dimensional material laminate according to the present example may include a post-curing step after the placement step and before a transfer step described below. Which one of the pre-curing step and the post-curing step can be freely selected.

The post-curing step is a step of curing the adhesive layer 12 of the adhesive sheet 10 by irradiation with active energy rays. However, the post-curing step is performed after the bubble formation step in the above-described method for manufacturing a laminate, and is distinguished from the pre-curing step performed before the bubble formation step.

Since the adhesive sheet of the present embodiment is an active energy ray-curable adhesive sheet, in the adhesive sheet attachment step described above, the adhesive layer 12 of the adhesive sheet 10 readily conforms to the shape of the two-dimensional material 30. In addition, by performing the post-curing step before the transfer step described below, the adhesive force of the adhesive layer 12 of the adhesive sheet 10 is reduced, so that the adhesive sheet 10 can be more readily peeled from the two-dimensional material 30 in the transfer step. As a result, a high transfer rate is readily obtained. In one aspect, when the two-dimensional material is graphene, graphene having a high transfer rate and high mobility is readily obtained.

In the present example, either the pre-curing step or the post-curing step may be performed. However, in view of more readily obtaining a higher transfer rate and mobility, it is preferable to perform the pre-curing treatment.

### (Transfer Step)

Next, in the method for manufacturing a two-dimensional material laminate of the present example, the adhesive sheet is peeled to transfer the two-dimensional material onto the second substrate, thereby obtaining a two-dimensional material laminate including the second substrate and the two-dimensional material.

Fig. 6 is a schematic cross-sectional view showing a step of transferring the two-dimensional material 30 onto the second substrate 40 by peeling the adhesive sheet 10. By peeling the adhesive sheet 10 from the laminate 104, the two-dimensional material 30 is transferred onto the second substrate 40, and a laminate 105 including the second substrate 40 and the two-dimensional material 30 is obtained. The laminate 105 including the second substrate 40 and the two-dimensional material 30 may be referred to as a two-dimensional material laminate.

The peel angle when the adhesive sheet 10 is peeled from the laminate 104 is not particularly limited and is usually 180 degrees or less. However, when the peel angle is relatively large, stress is concentrated at the peel front of the adhesive sheet 10, so that the peel force at the interface between the adhesive sheet 10 and the two-dimensional material 30 is reduced, and defects such as tearing and cracking in the two-dimensional material 30 can be prevented from occurring. For this reason, a larger peel angle is preferred, and the peel angle is preferably 90 degrees or more, and more preferably 120 degrees or more. Further, the peel angle is preferably 180 degrees or less in view of the peeling mechanism.

The peel angle refers to an angle formed between the two-dimensional material 30 and a peeled portion of the adhesive sheet 10 when the adhesive sheet 10 is peeled from the laminate 104.

The peeling rate at the time of peeling the adhesive sheet 10 from the laminate 104 is not particularly limited, but when the peeling rate is low, the elastic property of the adhesive sheet 10 is reduced, and thus the peel force at the interface between the adhesive sheet 10 and the two-dimensional material 30 is reduced. Therefore, it is possible to prevent defects such as breakage or cracking from occurring in the two dimensional material 30. For this reason, the peel rate is usually 1000 mm/min or less, but a lower peel rate is preferred, with 600 mm/min or less being preferred and 300 mm/min or less being more preferred. Further, in view of stable operation of the apparatus, the peel rate is preferably 3 mm/min or more, and more preferably 10 mm/min or more.

The peel rate refers to a length by which the adhesive sheet 10 is peeled from the laminate 104 per unit time when the adhesive sheet 10 is peeled from the laminate 104.

The second substrate 40 is a substrate onto which a two-dimensional material is to be transferred. The second substrate 40 is preferably a substrate in which an adhesive force between a transfer surface thereof and the two-dimensional material 30 is stronger than an adhesive force between the two-dimensional material 30 and the adhesive layer 12 after active energy rays have been applied. Such a second substrate 40 may itself have a strong interaction with the two-dimensional material, or may be one to which such an interaction has been imparted by surface treatment. Examples of the surface treatment include application of a curable resin, melting of the surface, formation of a fine structure, and surface chemical modification, but the method is not limited thereto.

The second substrate 40 is not particularly limited, and may be any of a metal substrate, a ceramic substrate, a silicon substrate, a resin substrate, and the like. Examples of the second substrate 40 that are preferred include an SiO₂/Si substrate, a quartz substrate, a glass substrate, a PET substrate, a sapphire substrate, an ITO substrate, and a substrate on which a two-dimensional material is laminated, with an SiO₂/Si substrate being more preferred.

The second substrate 40 may also be a substrate in which a film made of copper, nickel, iron, or a mixed oxide containing at least one thereof is partially formed on a surface of a suitable underlying substrate such as a metal substrate, a ceramic substrate, a silicon substrate, or a resin substrate. The area ratio occupied by the film relative to the surface area of the underlying substrate is preferably 80% or less, more preferably 70% or less. Further, the area ratio occupied by the film relative to the surface area of the underlying substrate is preferably 5% or more, and more preferably 15% or more.

The thickness of the second substrate 40 is not particularly limited and may be appropriately selected, but is preferably 1 µm or more, more preferably 10 µm or more, and still more preferably 100 µm or more. In view of handling, the thickness is preferably 100 mm or less, more preferably 20 mm or less, and still more preferably 5 mm or less.

In addition, in the above-described example, the method for manufacturing a laminate has been described, which includes: a process of forming bubbles between the first substrate and the two-dimensional material; and a step of separating a laminate including the adhesive sheet and the two-dimensional material from the first substrate by forming the bubbles, or by pulling at least one of the adhesive sheet and the first substrate after forming the bubbles.

However, a method for manufacturing a laminate according to another example may include, instead of these steps, a step of peeling and separating the laminate including the adhesive sheet and the two-dimensional material from the first substrate.

The two-dimensional material laminate obtained by the above-described method for manufacturing a two-dimensional material laminate can be employed in transparent conductive films for touchscreen applications and the like, semiconductor devices or electronic devices such as transistors and integrated circuits, and transparent electrodes and electrochemical electrodes requiring a large area.

In addition to applications for transferring a two-dimensional material, the adhesive sheet of the present embodiment can be suitably applied to applications requiring re-peelability and low-contamination properties, such as protective films for protecting surfaces of various adherends.

### [Joined Body]

The joined body of the present embodiment is formed by attaching the adhesive layer of the adhesive sheet according to the present embodiment to the two-dimensional material.

The joined body is, for example, the laminate 103 including the adhesive sheet 10 and the two-dimensional material 30, which is obtained by the separation step in the above-described method for manufacturing a laminate.

As described above, the present specification describes the following matters.
(1) An adhesive sheet, including a base material and an adhesive layer, in which
   the adhesive layer contains a polymer having a radical-reactive carbon-carbon double bond in a side chain,
   a tensile elastic modulus at 23°C of the adhesive layer after curing, as measured under the measurement conditions set forth below, is 9 to 1000 MPa, and
   a peel force, measured at 23°C before curing, of the adhesive layer of the adhesive sheet with respect to a silicon wafer, when 180° peeling is performed at a tensile speed of 300 mm/min, is 0.001 to 3.0 N/20 mm.

### (Measurement conditions for the tensile elastic modulus of the adhesive layer after curing)

The tensile elastic modulus of the adhesive layer after curing is an initial tensile elastic modulus calculated from a slope at a point at which a slope of stress with respect to strain is maximum between 10% strain and 100% strain when a cylindrical sample, obtained by irradiating the adhesive layer with ultraviolet light at a dose of 450 mJ/cm² and rolling the adhesive layer so as to have a length of 30 mm and a diameter of 1 mm, is gripped at upper and lower 10-mm portions in a length direction and pulled at a speed of 50 mm/min.
(2) An adhesive sheet, including a base material and an adhesive layer, in which
   the adhesive layer contains a polymer having a radical-reactive carbon-carbon double bond in a side chain, and
   a peel force x (N/20 mm), measured at 23°C before curing, of the adhesive layer of the adhesive sheet with respect to a silicon wafer, when 180° peeling is performed at a tensile speed of 300 mm/min, and an HSP polar term y (MPa^{0.5}) of the polymer satisfy at least one of relationships represented by Formula 1 and Formula 2 below: $y - 0.52 x - 4.7 ≧ 0$ (Formula 1) $y + 0.50 x - 4.8 ≦ 0$ (Formula 2)
(3) The adhesive sheet according to (1), in which a peel force x (N/20 mm), measured at 23°C before curing, of the adhesive layer of the adhesive sheet with respect to a silicon wafer, when 180° peeling is performed at a tensile speed of 300 mm/min, and an HSP polar term y (MPa^{0.5}) of the polymer satisfy at least one of relationships represented by Formula 1 and Formula 2 below: $y - 0.52 x - 4.7 ≧ 0$ (Formula 1) $y + 0.50 x - 4.8 ≦ 0$ (Formula 2)
(4) The adhesive sheet according to any one of (1) to (3), in which the base material has a tensile elastic modulus at 23°C of 10 to 4000 MPa under the measurement conditions set forth below.

### Measurement conditions for the tensile elastic modulus of the base material

The tensile elastic modulus of the base material is an initial tensile elastic modulus calculated from a slope at a point at which a slope of stress with respect to strain becomes maximum between 10% strain and 100% strain when a sample of the base material having a width of 10 mm and a length of 20 mm is gripped at upper and lower 5-mm portions in a length direction and pulled at a speed of 50 mm/min.
(5) The adhesive sheet according to any one of (1) to (4), in which the adhesive sheet is for transferring a two-dimensional material.
(6) A joined body, including the adhesive layer of the adhesive sheet according to any one of (1) to (5) adhered to a two-dimensional material.

### Examples

The present invention will be described in detail below by way of Examples. However, the present invention is not limited to these Examples.

### (Example 1)

A monomer composition (solid content concentration: 40%) was prepared by mixing three monomers, namely, 71.2 g of 2-ethylhexyl acrylate (2EHA) (60 mol% of the total amount of monomers not including a hydroxyl group), 36.4 g of acryloyl morpholine (ACMO) (40 mol% of the total amount of monomers not including a hydroxyl group), and 20.4 g of 4-hydroxybutyl acrylate (4HBA) (an amount corresponding to 22 mol% when the total amount of monomers not including a hydroxyl group is taken as 100 mol%), together with 0.3 mass% of a polymerization initiator (Nyper^{®} BW manufactured by NOF Corporation) relative to the total mass of the monomers, and a solvent (ethyl acetate). The monomer composition was charged into a 1 L separable round-bottom flask in a polymerization apparatus equipped with a separable cover, a dropping funnel, a thermometer, a nitrogen inlet tube, a Liebig condenser, a vacuum seal, a stirring rod, and a stirring blade, and the atmosphere was purged with nitrogen at room temperature for 2 hours while stirring. Thereafter, while nitrogen was being introduced and stirring was continued, polymerization was performed by holding at 61°C for 8 hours to obtain a resin solution. To the obtained resin solution, 12.0 g of a compound for introducing a carbon-carbon unsaturated double bond (Karenz MOI manufactured by Showa Denko K.K.) was added, the amount corresponding to 12 mol% when the total amount of monomers not including a hydroxyl group is taken as 100 mol%. Further, dibutyltin dilaurate IV (manufactured by Wako Pure Chemical Industries, Ltd.) was added in an amount of 0.063 part by mass relative to 100 parts by mass of resin solids, and a solvent (ethyl acetate) was added as appropriate so that the solid content concentration was adjusted to 15%. Thereafter, stirring was carried out in an air atmosphere at 50°C for 24 hours to obtain an adhesive solution A (adhesive composition) containing acrylic polymer A.

Next, 12 parts by mass of a polyisocyanate compound (crosslinking agent, Takenate D-101E manufactured by Mitsui Chemicals, Inc.) and 4 parts by mass of a photopolymerization initiator (Omnirad 651 manufactured by IGM Resins) were added to the adhesive solution A relative to 100 parts by mass of the acrylic polymer A, thereby preparing an adhesive solution A'.

The adhesive solution A' prepared above was applied onto a silicone-treated surface of a PET release liner, and was thermally crosslinked at 120°C for 2 minutes to form an adhesive layer having a thickness of 15 µm. Next, an ethylene-vinyl acetate copolymer (EVA) film having a thickness of 115 µm was bonded to the surface of the adhesive layer. Thereafter, after storage at 50°C for 24 hours, the obtained sheet was referred to as the adhesive sheet of Example 1.

### (Example 2)

The adhesive sheet of Example 2 was produced in the same manner as Example 1, except that Karenz MOI was changed to an amount corresponding to 21 mol% when the total amount of monomers not including a hydroxyl group was taken as 100 mol%, Omnirad 651 was changed to 2 parts by mass, and Takenate D-101E was changed to 6 parts by mass.

The acrylic polymer contained in the adhesive solution obtained in Example 2 is referred to as an acrylic polymer B.

### (Example 3)

The adhesive sheet of Example 3 was produced in the same manner as Example 1, except that Karenz MOI was changed to an amount corresponding to 9 mol% when the total amount of monomers not including a hydroxyl group was taken as 100 mol%, Omnirad 651 was changed to 1 part by mass, and Takenate D-101E was changed to 10 parts by mass.

The acrylic polymer contained in the adhesive solution obtained in Example 3 is referred to as an acrylic polymer C.

### (Example 4)

The adhesive sheet of Example 4 was produced in the same manner as Example 1, except that 2EHA was changed to 90 mol% of the total amount of monomers not including a hydroxyl group, ACMO was changed to 10 mol% of the total amount of monomers not including a hydroxyl group, Karenz MOI was changed to an amount corresponding to 18 mol% when the total amount of monomers not including a hydroxyl group was taken as 100 mol%, and Omnirad 651 was changed to 6 parts by mass.

The acrylic polymer contained in the adhesive solution obtained in Example 4 is referred to as an acrylic polymer D.

### (Examples 5 and 6)

The adhesive sheets of Examples 5 and 6 were produced in the same manner as Example 1, except that 2EHA was changed to 75 mol% of the total amount of monomers not including a hydroxyl group, ACMO was changed to 25 mol% of the total amount of monomers not including a hydroxyl group, Karenz MOI was changed to an amount corresponding to 11 mol% when the total amount of monomers not including a hydroxyl group was taken as 100 mol%, Omnirad 651 was changed to 3 parts by mass, and Takenate D-101E was changed to 4 parts by mass.

The acrylic polymer contained in the adhesive solution obtained in Examples 5 and 6 is referred to as an acrylic polymer E.

### (Comparative Example 1)

The adhesive sheet of Comparative Example 1 was produced in the same manner as Example 1, except that 2EHA was changed to 90 mol% of the total amount of monomers not including a hydroxyl group, ACMO was changed to 10 mol% of the total amount of monomers not including a hydroxyl group, Karenz MOI was changed to an amount corresponding to 15 mol% when the total amount of monomers not including a hydroxyl group was taken as 100 mol%, Omnirad 651 was changed to 5 parts by mass, and Takenate D-101E was changed to 2 parts by mass.

The acrylic polymer contained in the adhesive solution obtained in Comparative Example 1 is referred to as an acrylic polymer F.

### (Comparative Example 2)

A monomer composition (solid content concentration: 40%) was prepared by mixing two monomers, namely, 130.0 g of n-butyl acrylate (BA) and 2.6 g of acrylic acid (AA), together with 0.3 mass% of a polymerization initiator (Nyper^{®} BW manufactured by NOF Corporation) relative to the total mass of the monomers, and a solvent (ethyl acetate). The monomer composition was charged into a 1 L separable round-bottom flask in a polymerization apparatus equipped with a separable cover, a dropping funnel, a thermometer, a nitrogen inlet tube, a Liebig condenser, a vacuum seal, a stirring rod, and a stirring blade, and the atmosphere was purged with nitrogen at room temperature for two hours while stirring. Thereafter, while nitrogen was being introduced and stirring was continued, the monomer composition was held at 61°C for 8 hours for polymerization, thereby obtaining an adhesive solution G (adhesive composition) containing acrylic polymer G.

Next, to adhesive solution G, 3 parts by mass of an epoxy-based crosslinking agent (TETRAD C manufactured by Mitsubishi Gas Chemical Company, Inc.) was added per 100 parts by mass of acrylic polymer G, thereby preparing adhesive solution G'.

The adhesive solution G' prepared above was applied onto a silicone-treated surface of a PET release liner, and was thermally crosslinked at 120°C for 2 minutes to form an adhesive layer having a thickness of 15 µm. Next, an EVA film having a thickness of 115 µm was bonded to the surface of the adhesive layer. Thereafter, after storage at 50°C for 24 hours, the obtained sheet was referred to as the adhesive sheet of Comparative Example 2.

### (Comparative Example 3)

A monomer composition (solid content concentration: 40%) was prepared by mixing 60.0 g of 2-ethylhexyl acrylate (2EHA), 65.4 g of methyl acrylate (MA), and 6.3 g of acrylic acid (AA), together with 0.3 weight percent of a polymerization initiator (Nyper^{®} BW manufactured by NOF Corporation) relative to the total mass of the monomers, and a solvent (ethyl acetate). The monomer composition was charged into a 1 L separable round-bottom flask in a polymerization apparatus equipped with a separable cover, a dropping funnel, a thermometer, a nitrogen inlet tube, a Liebig condenser, a vacuum seal, a stirring rod, and a stirring blade, and the atmosphere was purged with nitrogen at room temperature for two hours while stirring. Thereafter, while nitrogen was being introduced and stirring was continued, the monomer composition was held at 61°C for 8 hours for polymerization, thereby obtaining an adhesive solution H (adhesive composition) containing acrylic polymer H.

Next, 100 parts by weight of dipentaerythritol hexaacrylate (polyfunctional low-molecular-weight compound: DPHA manufactured by Nippon Kayaku Co., Ltd.), 3 parts by mass of a polyisocyanate compound (Takenate D-101E manufactured by Mitsui Chemicals, Inc.), and 3 parts by mass of a photopolymerization initiator (Omnirad 651 manufactured by IGM Resins) were added to the adhesive solution H relative to 100 parts by mass of the acrylic polymer H, thereby preparing an adhesive solution H'.

The adhesive solution H' prepared above was applied onto a silicone-treated surface of a PET release liner, and was thermally crosslinked at 120°C for 2 minutes to form an adhesive layer having a thickness of 30 µm. Next, an EVA film having a thickness of 115 µm was bonded to the surface of the adhesive layer. Thereafter, after storage at 50°C for 24 hours, the obtained sheet was referred to as the adhesive sheet of Comparative Example 3.

### (Example 7)

The adhesive sheet of Example 7 was produced in the same manner as Example 1, except that 2EHA was changed to 100 mol% of the total amount of monomers not including a hydroxyl group, ACMO was changed to 0 mol% of the total amount of monomers not including a hydroxyl group, Karenz MOI was changed to an amount corresponding to 16 mol% when the total amount of monomers not including a hydroxyl group was taken as 100 mol%, Omnirad 651 was changed to 3 parts by mass, and Takenate D-101E was changed to 4 parts by mass.

The acrylic polymer contained in the adhesive solution obtained in Example 7 is referred to as an acrylic polymer I.

### <Polymer HSP Polar Term>

For each of the acrylic polymers A to I in Examples 1 to 7 and Comparative Examples 1 to 3, the numerical value of the polar term among the HSP values was calculated as follows.

The Hansen solubility parameter (HSP) values for each polymer were obtained as follows. SMILES notation was prepared for polymer units obtained by polymerizing the respective monomers used. Using software "HSPiP ver. 5" for Windows^{®}, the HSP dispersion term, polar term, and hydrogen bonding term were calculated. For a copolymer, the HSP values were obtained by summing, for each term, the values obtained by multiplying the term by the corresponding molar fraction. In SMILES notation for a polymer unit obtained by polymerizing a monomer, both sides of the main chain are represented by X. For example, a polymer unit obtained by polymerizing styrene is represented as XCC(C1=CC=CC=C1)X. The molar ratio of the copolymer composition of a carrier containing a polymerized reactive polymer can also be determined as follows. First, the monomer composition of the carrier containing the polymerized reactive polymer is estimated by pyrolysis GC/MS. A polymer containing the monomer is separately synthesized. If the same peak is detected by the same analysis, the monomer is considered to be contained in the copolymerized reactive polymer. In this case, pyrolysis GC/MS measurement is performed using about 100 µg of a sample. For pyrolysis GC/MS, a heating device, Frontier Laboratories PY-2020iD; a GC apparatus, Agilent Technologies 7890A; and an MS apparatus, Agilent Technologies 5975C, are used. The pyrolysis temperature is 550°C. The GC conditions are as follows: column: HP-5MS UI, 30 m × 0.25 mm i.d. × 0.25 µm film thickness; carrier gas: He, 3.0 mL/min (constant flow mode); column temperature: 40°C (5 min) → +10°C/min → 300°C (9 min); inlet: split mode (50:1); inlet temperature: 250°C; and detector: MS. The MS conditions are as follows: ionization method: EI; emission current: 35 µA; electron energy: 70 eV; E.M. voltage: 1718 V; source temperature: 230°C; Q-pole temperature: 150°C; and interface temperature: 300°C. Next, when the contained monomers are identified, the quantitative ratio (wt% or mol%) of the monomers is quantified by pyrolysis GC/MS, whereby the molar ratio of the copolymerized reactive polymer composition is determined.

The numerical value of the polar term among the HSP values of each polymer used in the adhesive, calculated using software "HSPiP ver. 5.2" for Windows^{®}, was taken as the polymer HSP polar term.

### <Formation of an Epitaxial Metal Film on a Single-Crystal Substrate Surface by Sputtering>

As the single-crystal substrate, the c-plane (0001) of sapphire (α-Al₂O₃) purchased from Adamant Namiki Precision Jewel Co., Ltd. was used.

The above single-crystal substrate was mounted in a chamber of an RF magnetron sputtering apparatus (CFS-4ES, Shibaura Mechatronics), and Cu metal was sputtered over the entire surface of the single-crystal substrate (Ar atmosphere, standard vacuum level: 0.6 Pa). Thus, a Cu film having a thickness of 1000 nm was epitaxially deposited to obtain a Cu/sapphire substrate.

### <CVD Formation of Graphene>

The above Cu/sapphire substrate was placed, as a substrate for graphene film formation, inside a quartz tube set in a ceramic tubular furnace manufactured by Asahi Rika Seisakusho (inner diameter: 26 mm). As the Cu/sapphire substrate, one having a substrate size of 10 mm × 20 mm was used. Thereafter, under atmospheric pressure, the temperature was raised to a specified temperature (1000 to 1075°C) while argon and hydrogen were being supplied. After the specified temperature was reached, the substrate was held under the same conditions for 0 to 3 hours to reduce and smooth the Cu surface. Thereafter, methane was added at 10 to 200 ppm, and a chemical vapor deposition reaction was carried out for 90 minutes. After the reaction, the substrate was cooled, and after reaching room temperature (23°C), the Cu/sapphire substrate on which monolayer graphene had been formed (first laminate) was taken out from the quartz tube. By this reaction, a continuous monolayer graphene film covering the entire Cu surface was formed on the Cu surface. In addition, 90% or more of the area of the formed graphene was monolayer graphene.

### <CVD Formation of MoS₂>

A sapphire substrate (manufactured by Kyocera Corporation, c-plane) was placed, as a substrate for forming molybdenum disulfide (MoS₂), which is a type of transition metal chalcogenide, inside a quartz tube (inner diameter: 26 mm) set in a ceramic tubular furnace manufactured by Asahi Rika Seisakusho. Further, a crucible containing molybdenum trioxide powder as a source material was placed in an upstream region of the gas flow relative to the film-formation substrate inside the quartz tube, and a crucible containing sulfur powder was placed further upstream.

As the sapphire substrate, one having a size of 10 mm × 20 mm was used, and 10 to 50 mg of molybdenum trioxide and 50 to 200 mg of sulfur were used. As for the distance between the sapphire substrate and each crucible, the sapphire substrate, which required the highest reaction temperature, was placed at the center of the tubular furnace, the molybdenum trioxide crucible was placed at a position 10 to 20 cm away therefrom, and the sulfur crucible was placed at a position 15 to 25 cm away from the molybdenum trioxide crucible.

Thereafter, under atmospheric pressure, while argon was being supplied, the sapphire substrate and each crucible were heated to specified temperatures (substrate: 850 to 950°C, molybdenum trioxide: 580 to 600°C, sulfur: 100 to 200°C), and a chemical vapor deposition reaction was carried out for 1 hour. After the reaction, the substrate was cooled, and after reaching room temperature (23°C), the sapphire substrate on which MoS₂ had been formed was taken out from the quartz tube. By this reaction, MoS₂ was formed on the surface of the sapphire substrate to obtain Laminate A (first laminate, MoS₂/sapphire substrate).

### <Transfer of Graphene Using an Adhesive Sheet>

The following experiment was performed using each of the adhesive sheets of Examples 1 to 5 and Comparative Examples 1 to 3. However, when the adhesive sheet of Comparative Example 2 was used, UV treatment using a UV irradiator was not performed.

An adhesive sheet was attached to the surface of the graphene of the first laminate using a roller (a pressing force of 2 kg/10 mm), subjected to autoclave treatment at 50°C and 5 atm for 30 minutes, and then left standing at room temperature and atmospheric pressure for 30 minutes, thereby forming a second laminate. A portion of the adhesive sheet in the substrate peripheral region of the second laminate was trimmed with a cutter knife to form an exposed Cu/graphene surface portion of about 5 mm².

UV treatment was performed from the base-material side of the adhesive sheet with an irradiation dose of 450 mJ/cm² using a UV irradiation apparatus (UM-810, manufactured by Nitto Seiki Co., Ltd.).

The exposed Cu/graphene surface portion of the second laminate (substrate/graphene/adhesive sheet) was clipped with an electrode clip to serve as a working electrode, and the laminate was immersed in an acrylic water tank filled with a 1 M aqueous sodium hydroxide solution, together with a Pt electrode as a counter electrode and an Ag/AgCl electrode as a reference electrode, and a DC voltage of 4 V was applied using a potentiostat (Vertex10A, manufactured by IVIUM). After voltage application, the laminate of graphene/adhesive sheet (third laminate) was separated from the Cu/sapphire substrate by generation of gas (bubbles) due to electrolysis at the interface between the Cu surface and the graphene.

The laminate of graphene/adhesive sheet (third laminate) was immersed in deionized water and washed, and was attached by water-assisted lamination to a silicon substrate with an oxide film (manufactured by SUMCO Corporation, silicon (crystal plane (100)), surface thermal oxidation-oxide film thickness: 300 nm; hereinafter also simply referred to as "silicon substrate") using a roller (pressing force: 2 kg/10 mm), allowed to stand at room temperature for 24 hours, and then heat-treated at 90°C for 3 hours to obtain a fourth laminate. The graphene was attached to the oxide film (SiO₂) of the silicon substrate.

The silicon substrate in the fourth laminate was fixed, and the adhesive sheet was peeled at a peel angle of 180 degrees and a peel rate of 300 mm/min using a tensile tester (VPA-H200F, manufactured by Kyowa Interface Science Co., Ltd.), thereby transferring the graphene onto the silicon substrate and obtaining a laminate of the silicon substrate and the graphene in Example 1 (fifth laminate). The fifth laminate is also referred to as a two-dimensional material laminate.

### <Transfer of MoS₂ Using an Adhesive Sheet>

The following experiment was performed using the adhesive sheet of Example 6 or 7.

The adhesive sheet of Example 6 or 7 was attached to the MoS₂ surface of Laminate A using a roller (pressing force: 2 kg/10 mm), followed by autoclave treatment at 50°C and 5 atm for 30 minutes, and then allowed to stand at room temperature and atmospheric pressure for 30 minutes. UV treatment was performed from the base-material side of the adhesive sheet with an irradiation dose of 450 mJ/cm² using a UV irradiation apparatus (UM-810, manufactured by Nitto Seiki Co., Ltd.).

Thereafter, Laminate B (second laminate, adhesive sheet/MoS₂/sapphire substrate) was immersed in water, and MoS₂ was transferred from the sapphire substrate to the adhesive sheet by peeling at a peel angle of 120 degrees and a peel rate of 30 mm/min in water at room temperature, thereby obtaining Laminate C (third laminate, adhesive sheet/MoS₂).

Thereafter, Laminate C was placed such that the MoS₂ surface was in contact with a silicon substrate with an oxide film (manufactured by SUMCO Corporation, silicon (crystal plane (100)), surface thermal oxidation-oxide film thickness: 300 nm), and was attached using a roller (pressing force: 2 kg/10 mm), thereby obtaining Laminate D (fourth laminate, adhesive sheet/MoS₂/silicon substrate).

After Laminate D was allowed to stand at room temperature and atmospheric pressure for 30 minutes, the adhesive sheet of Example 6 or 7 was peeled at a peel angle of 180 degrees and a peel rate of 300 mm/min, so that the MoS₂ of Laminate D was transferred to the silicon substrate to obtain Laminate E including the silicon substrate and MoS₂ (fifth laminate, two-dimensional material laminate).

### <Tensile Elastic Modulus of the Adhesive Layer After Curing>

The tensile elastic modulus of the adhesive layer after curing was measured as follows. An adhesive layer obtained during production of each adhesive sheet, before lamination to a base material, was irradiated with ultraviolet light at a dose of 450 mJ/cm² and rolled so as to have a length of 30 mm and a diameter of 1 mm, thereby preparing a cylindrical sample. Upper and lower 10-mm portions of the cylindrical sample were gripped so that the distance between grips was 10 mm, and the cylindrical sample was pulled at a speed of 50 mm/min. Using a tensile tester (AUTOGRAPH AGS-X, manufactured by Shimadzu Corporation), an initial tensile elastic modulus calculated from the slope at a point at which the slope of stress with respect to strain was maximum between 10% strain and 100% strain was measured, and this initial tensile elastic modulus was defined as the tensile elastic modulus of the adhesive layer after curing. However, the adhesive sheet of Comparative Example 2 was not subjected to UV treatment.

Each tensile elastic modulus was a value measured at 23°C.

### <Tensile Elastic Modulus of the Base Material>

The tensile elastic modulus of the base material was measured and calculated in the same manner as described above. Specifically, samples having a width of 10 mm and a length of 20 mm were prepared from the ethylene-vinyl acetate copolymer (EVA) film having a thickness of 115 µm used in each of the Examples and Comparative Examples, and portions of 5 mm at both ends in the length direction were gripped. The tensile elastic modulus was 55 MPa.

### <Peel Force of the Adhesive Sheet>

Each of the adhesive sheets of Examples 1 to 7 and Comparative Examples 1 to 3 was cut to a width of 20 mm and a length of 10 cm, and the release liner was peeled off and removed.

Subsequently, each adhesive sheet of the respective example was pressure-bonded and attached to a silicon wafer (4-inch silicon mirror wafer) by one reciprocation with a 2 kg roller, and then allowed to stand for 30 minutes.

Using a tensile tester (VPA-H200F, manufactured by Kyowa Interface Science Co., Ltd.), the peel force (N/20 mm) was measured when the adhesive sheet was peeled at a peel angle of 180 degrees and a peel rate of 300 mm/min (180° peel force against a silicon wafer). The measurement temperature was 23°C.

In addition, after ultraviolet light was irradiated to the adhesive layer from the base-material side of each adhesive sheet attached to a silicon wafer in the same manner as described above at a dose of 450 mJ/cm², the peel force (N/20 mm) (180° peel force with respect to a silicon wafer), when the adhesive sheet was peeled at a peel angle of 180 degrees and a peel rate of 300 mm/min was measured using a tensile tester (VPA-H200F manufactured by Kyowa Interface Science Co., Ltd.). The measurement temperature was 23°C. However, for the adhesive sheet of Comparative Example 2, because UV treatment was not performed, the peel force described above was not measured and is indicated by "-" in Table 1.

### <Transfer Rate>

Digital images of graphene or MoS₂ remaining on the surface of the transferreceiving material (the oxide film (SiO₂) side of the silicon substrate) were obtained using an optical microscope (VHX-8000 manufactured by Keyence Corporation). The images were obtained from the laminate of the silicon substrate and graphene or MoS₂ (the fifth laminate), which had been obtained by transferring graphene or MoS₂ using the adhesive sheets of Examples 1 to 7 and Comparative Examples 1 to 3. The digital images were acquired, as observation images at 500× objective magnification, at nine locations on the graphene-side or MoS₂-side surface of the laminate having dimensions of 10 mm × 20 mm. Specifically, the center of the substrate was designated as point E, and two points located 6.5 mm to the left and right of point E were designated as points D and F, respectively. Further, points located 2.5 mm above and below point D were designated as points A and G, respectively. Similarly, points located 2.5 mm above and below point E were designated as points B and H, respectively, and points located 2.5 mm above and below point F were designated as points C and I, respectively. Using a 500 µm × 300 µm region from each digital image acquired for points A to I, RGB separation and binarization analysis of each component image were performed with the software "ImageJ," and the area ratio of graphene or MoS₂ in the relevant digital image was determined as a percentage. The average value of the area ratios of graphene or MoS₂ in the digital images at the nine points A to I was taken as the transfer rate (%).

### <Low Contamination (Contamination Amount)>

Laminates of a silicon substrate and graphene or MoS₂, obtained by transferring graphene or MoS₂ using the adhesive sheets of Examples 1 to 7 and Comparative Examples 1 to 3, were subjected to ESCA analysis. An increase in the elemental amount of carbon (atomic%) calculated by ESCA analysis, relative to the elemental amount of carbon (atomic%) measured in the same manner for the graphene or MoS₂ laminate on the Cu surface before transfer, was taken as the contamination amount.

The carbon content was determined, for the surface of the target substrate, as the elemental ratio of carbon (atomic %) out of the total amount of the five elements carbon, oxygen, nitrogen, silicon, and copper, by performing narrow-scan analysis for those five elements by X-ray photoelectron spectroscopy (ESCA). As the analyzer, "Quantum 2000" manufactured by ULVAC PHI was used.

The analyzer and measurement conditions used for measuring the carbon content are shown below.
- Analyzer: Quantum 2000 manufactured by ULVAC PHI
- X-ray source: monochromatic AlKα
- X Ray setting: 200 µm in diameter [15 kV, 30 W]
- Binding energy correction: the peak derived from the C-C bond was corrected to 285.0 eV
- Charge neutralization conditions: combined use of a neutralizer gun and an Ar ion gun (neutralization mode)

Samples having a contamination amount of -30% or more and 10% or less were evaluated as having low contamination. Since residues present before transfer may be removed in the transfer step, the contamination amount may be negative. When the contamination amount of the two-dimensional material is less than -30%, the quality of the two-dimensional material before transfer deteriorates because the amount of residues before transfer is excessively large. When the contamination amount of the two-dimensional material exceeds 10%, the performance of the two-dimensional material after transfer deteriorates because the amount of residues after transfer is excessively large.

The results for the adhesive sheets of Examples 1 to 7 and Comparative Examples 1 to 3 are collectively shown in Table 1 below together with the respective measurement results.

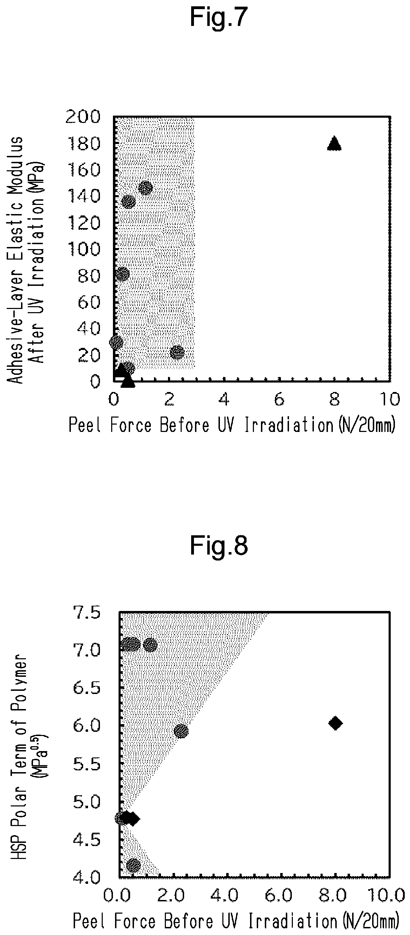

Fig. 7 plots, for the adhesive sheets of Examples 1 to 7 and Comparative Examples 1 to 3, the relationship between peel force (N/20 mm) with respect to a silicon wafer before UV irradiation and tensile elastic modulus (MPa) of the adhesive layer after UV irradiation. However, since UV irradiation was not performed on the adhesive sheet of Comparative Example 2, Fig. 7 plots the relationship between peel force (N/20 mm) with respect to a silicon wafer without UV irradiation and tensile elastic modulus (MPa) of the adhesive layer without UV irradiation.

Fig. 8 plots, for the adhesive sheets of Examples 1 to 7 and Comparative Examples 1 to 3, the relationship between peel force (N/20 mm) with respect to a silicon wafer before UV irradiation and the HSP polar term of the polymer.

In Fig. 8, the region shown in gray represents a region in which the peel force x (N/20 mm), measured at 23°C before ultraviolet irradiation, with respect to a silicon wafer, when 180° peeling was performed at a tensile speed of 300 mm/min, and the HSP polar term y (MPa^{0.5}) of the polymer satisfied at least one of the relationships of Formula 1 and Formula 2 below. $y - 0.52 x - 4.7 ≧ 0$ (Formula 1) $y + 0.50 x - 4.8 ≦ 0$ (Formula 2)

**[Table 1]**

| | ACMO Amount **(mol)** | MOI Amount **(mol)** | Photopolymerization Initiator Amount **(Parts By Mass)** | Crosslinking-Agent Amount **(Parts By Mass)** | Polyfunctional Low-Molecular-Weight Compound Amount **(Parts By Mass)** | Two-Dimensional Material | Polymer HSP Polar Term y (Separately Calculated)**(MPa^0.5)** | Adhesive-Layer Elastic Modulus After Triggering (After UV Irradiation) **(MPa)** | Peel Force x With Respect To Silicon Wafer Before Triggering (Before UV Irradiation) **(N/20** mm) | Peel Force With Respect To Silicon Wafer After Triggering (After UV Irradiation) **(N/20** mm) | y - 0. 5 2 | y + 0. 50 | Transfer Rate **(%)** | Low-Contamination Property (Contamination Amount) (%) |
|---|---|---|---|---|---|---|---|---|---|---|---|---|---|---|
| | | | | | | | | | | | x - 4. 7 | x-4. 8 | | |
| Example 1 | **40** | **12** | **4** | **12** | **0** | Graphene | **7.08** | **136.26** | **0.53** | **0.07** | **2.10** | **2.55** | **99** | **-18** |
| Example 2 | **40** | **21** | **2** | **6** | **0** | Graphene | **7.07** | **146.75** | **1.14** | **0.09** | **1.78** | **2.84** | **98** | **5** |
| Example 3 | **40** | **9** | **1** | **10** | **0** | Graphene | **7.08** | **81.54** | **0.32** | **0.15** | **2.21** | **2.44** | **98** | **-8** |
| Example 4 | **10** | **18** | **6** | **12** | **0** | Graphene | **4.79** | **29.62** | **0.08** | **0.07** | **0.05** | **0.03** | **93** | **9** |
| Example 5 | **25** | **11** | 3 | **4** | **0** | Graphene | **5.94** | **22.2** | **2.3** | **0.2** | **0.04** | **2.29** | **81** | **10** |
| Example 6 | **25** | **11** | 3 | **4** | **0** | **MoS₂** | **5.94** | **22.2** | **2.3** | **0.2** | **0.04** | **2.29** | **85** | **7** |
| Comparative Example 1 | **10** | **15** | 5 | **2** | **0** | Graphene | **4.79** | **8.99** | **0.26** | **0.11** | **-0.05** | **0.12** | **51** | **-2** |
| Comparative Example 2 | **0** | **0** | 0 | **3** | **0** | Graphene | **4.77** | **1.2** | **0.5** | **-** | **-0.19** | **0.22** | **98** | **26** |
| Comparative Example 3 | **0** | **0** | 3 | **3** | **100** | Graphene | **6.03** | **182** | **8.3** | **0.09** | **-2.99** | **5.38** | **73** | **16** |
| Example 7 | **0** | **16** | **3** | **4** | **0** | **MoS₂** | **4.16** | **10.1** | **0.51** | **0.02** | **-0.81** | **-0.39** | **97** | **7** |

In the adhesive sheets of Examples 1 to 7, the tensile elastic modulus of the adhesive layer after UV irradiation was within the range of 9 to 1000 MPa. In addition, the peel force with respect to a silicon wafer before UV irradiation was within the range of 0.001 to 3.0 N/20 mm. Further, the peel force (N/20 mm) with respect to a silicon wafer before UV irradiation and the HSP polar term of the polymer satisfied at least one of the relationships represented by Formula 1 and Formula 2 below. The adhesive sheets of Examples 1 to 7 exhibited favorable low-contamination properties and enabled transfer of a two-dimensional material at a high transfer rate. $y - 0.52 x - 4.7 ≧ 0$ (Formula 1) $y + 0.50 x - 4.8 ≦ 0$ (Formula 2)

In the adhesive sheet of Comparative Example 1, the tensile elastic modulus of the adhesive layer after UV irradiation was lower than 9 MPa. The peel force before UV irradiation with respect to a silicon wafer and the HSP polar term of the polymer satisfied neither the relationship represented by Formula 1 above nor the relationship represented by Formula 2 above. The adhesive sheet of Comparative Example 1 had a relatively low transfer rate of graphene.

The adhesive sheet of Comparative Example 2 included an adhesive layer that did not contain a polymer having a radical-reactive carbon-carbon double bond in a side chain. The peel force before UV irradiation with respect to a silicon wafer and the HSP polar term of the polymer satisfied neither the relationship represented by Formula 1 above nor the relationship represented by Formula 2 above. Therefore, favorable low-contamination properties were not obtained with the adhesive sheet of Comparative Example 2.

The adhesive sheet of Comparative Example 3 included an adhesive layer that contained a low-molecular-weight compound having a radical-reactive carbon-carbon double bond but did not contain a polymer having a radical-reactive carbon-carbon double bond in a side chain. The peel force before UV irradiation with respect to a silicon wafer and the HSP polar term of the polymer satisfied neither the relationship represented by Formula 1 above nor the relationship represented by Formula 2 above. Therefore, favorable low-contamination properties were not obtained with the adhesive sheet of Comparative Example 3.

Although the present invention has been described in detail with reference to a specific embodiment, those skilled in the art will appreciate that various changes and modifications can be made without departing from the spirit and scope of the present invention.

This application is based on Japanese Patent Application No. 2023-223308 filed on December 28, 2023, the entirety of which is incorporated herein by reference.

### REFERENCE SIGNS LIST

10) Adhesive Sheet
11) Base Material
12) Adhesive Layer
21) First Substrate
30) Two-Dimensional Material
40) Second Substrate
101) Laminate (First Laminate)
102) Laminate (Second Laminate)
103) Laminate (Third Laminate)
104) Laminate (Fourth Laminate)
105) Two-Dimensional Material Laminate (Fifth Laminate)

## Claims

1. An adhesive sheet, comprising a base material and an adhesive layer, wherein
the adhesive layer contains a polymer having a radical-reactive carbon-carbon double bond in a side chain,
a tensile elastic modulus at 23°C of the adhesive layer after curing, as measured under the measurement conditions set forth below, is 9 to 1000 MPa, and
a peel force, measured at 23°C before curing, of the adhesive layer of the adhesive sheet with respect to a silicon wafer, when 180° peeling is performed at a tensile speed of 300 mm/min, is 0.001 to 3.0 N/20 mm.
(Measurement conditions for the tensile elastic modulus of the adhesive layer after curing)
The tensile elastic modulus of the adhesive layer after curing is an initial tensile elastic modulus calculated from a slope at a point at which a slope of stress with respect to strain is maximum between 10% strain and 100% strain when a cylindrical sample, obtained by irradiating the adhesive layer with ultraviolet light at a dose of 450 mJ/cm² and rolling the adhesive layer so as to have a length of 30 mm and a diameter of 1 mm, is gripped at upper and lower 10-mm portions in a length direction and pulled at a speed of 50 mm/min.

2. An adhesive sheet, comprising a base material and an adhesive layer, wherein
the adhesive layer contains a polymer having a radical-reactive carbon-carbon double bond in a side chain, and
a peel force x (N/20 mm), measured at 23°C before curing, of the adhesive layer of the adhesive sheet with respect to a silicon wafer, when 180° peeling is performed at a tensile speed of 300 mm/min, and an HSP polar term y (MPa^{0.5}) of the polymer satisfy at least one of relationships represented by Formula 1 and Formula 2 below: $y - 0.52 x - 4.7 ≧ 0$ (Formula 1) $y + 0.50 x - 4.8 ≦ 0$ (Formula 2).

3. The adhesive sheet according to claim 1, wherein a peel force x (N/20 mm), measured at 23°C before curing, of the adhesive layer of the adhesive sheet with respect to a silicon wafer, when 180° peeling is performed at a tensile speed of 300 mm/min, and an HSP polar term y (MPa^{0.5}) of the polymer satisfy at least one of relationships represented by Formula 1 and Formula 2 below: $y - 0.52 x - 4.7 ≧ 0$ (Formula 1) $y + 0.50 x - 4.8 ≦ 0$ (Formula 2).

4. The adhesive sheet according to any one of claims 1 to 3, wherein the base material has a tensile elastic modulus at 23°C of 10 to 4000 MPa under the measurement conditions set forth below.
(Measurement conditions for the tensile elastic modulus of the base material)
The tensile elastic modulus of the base material is an initial tensile elastic modulus calculated from a slope at a point at which a slope of stress with respect to strain becomes maximum between 10% strain and 100% strain when a sample of the base material having a width of 10 mm and a length of 20 mm is gripped at upper and lower 5-mm portions in a length direction and pulled at a speed of 50 mm/min.

5. The adhesive sheet according to any one of claims 1 to 3, wherein the adhesive sheet is for transferring a two-dimensional material.

6. A joined body, comprising the adhesive layer of the adhesive sheet according to any one of claims 1 to 3 adhered to a two-dimensional material.
